(19) Europäisches Patentamt
European Patent Office
Office européen des brevets

(11) **EP 1 355 449 B1**

(12) **FASCICULE DE BREVET EUROPEEN**

(45) Date de publication et mention
de la délivrance du brevet:
**28.02.2007 Bulletin 2007/09**

(51) Int Cl.:
*H04L 12/24* *(2006.01)*    *H04L 12/46* *(2006.01)*

(21) Numéro de dépôt: **03290830.3**

(22) Date de dépôt: **02.04.2003**

(54) **Procédé et système de détermination des paramètres de fonctionnement d'un réseau de transmission d'informations pour créer, dans ce réseau, un réseau virtuel**

Verfahren und System zur Bestimmung von Parametern eines Datenübertragungsnetzwerks zur Erzeugung eines virtuellen Privatnetzwerks in diesem Netzwerk

Method and system for determining the parameters of a data transmission network for creating, in that network, a virtual private network

(84) Etats contractants désignés:
**AT BE BG CH CY CZ DE DK EE ES FI FR GB GR HU IE IT LI LU MC NL PT RO SE SI SK TR**

(30) Priorité: **17.04.2002 FR 0204816**

(43) Date de publication de la demande:
**22.10.2003 Bulletin 2003/43**

(73) Titulaire: **FRANCE TELECOM**
**75015 Paris (FR)**

(72) Inventeurs:
• **Kerivin, Hervé**
**Minneapolis, MN 55401 (US)**

• **Ben Ameur, Walid**
**75015 Paris (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 1 111 840**          **WO-A- 01/91369**
**US-A- 6 079 020**

• **MITRA D ET AL: "A case study of multiservice, multipriority traffic engineering design for data networks" IEEE GLOBECOM'99, pages 1077-1083, XP010373707**

**EP 1 355 449 B1**

## Description

L'invention concerne un procédé et un système de détermination des paramètres de fonctionnement d'un réseau principal de transmission d'informations pour créer dans ce réseau principal un réseau virtuel entre plusieurs points de raccordement au réseau principal.

Plus précisément, le procédé et ce système visent à déterminer des paramètres de fonctionnement statiques et indépendants de la quantité d'informations actuellement transportée sur le réseau principal et/ou sur le réseau virtuel, le procédé comportant :

- une étape d'établissement de contraintes sur les débits d'informations demandés entre les n points de raccordement, ces contraintes étant exprimées sous la forme d'inégalités mathématiques entre, d'une part, une combinaison de débits d'informations demandés, notés $t_{ij}$, entre des paires de points de raccordement du réseau virtuel, et, d'autre part, une limite imposée par l'utilisateur à la combinaison des débits d'informations, l'ensemble de ces inégalités mathématiques définissant un domaine borné à l'intérieur duquel doit se situer l'ensemble des débits d'informations demandés entre les n points de raccordement lors de l'utilisation du réseau virtuel, ce domaine étant un polytope D, et
- une étape de calcul automatique des paramètres de fonctionnement du réseau principal de transmission d'informations permettant d'établir le réseau virtuel satisfaisant aux contraintes exprimées lors de l'étape d'établissement.

Un réseau virtuel est un service fourni par un opérateur d'un réseau public de transmission d'informations, consistant à réserver à l'usage unique d'un client une certaine quantité de ressources du réseau public pour interconnecter les différents sites de ce client. Ainsi, grâce à ce processus de réservation à son usage exclusif de ressources du réseau public, un réseau virtuel privé est formé au sein du réseau public. Ce service permet donc au client de louer une partie des infrastructures du réseau public pour son usage personnel ce qui lui évite par exemple d'avoir à construire lui-même un réseau de transmission d'informations entre ses différents sites.

Le problème qui se pose à l'opérateur est donc connaissant la qualité de services souhaitée par le client par exemple exprimée en termes de débits maximaux d'informations entre ses différents sites, de déterminer quelles sont les ressources du réseau public à réserver. Actuellement, deux grandes familles de stratégies sont utilisées pour résoudre ce problème. La première famille de stratégies consiste à allouer dynamiquement les ressources du réseau public en fonction des débits d'informations actuellement demandés par le client. Ainsi, suivant cette famille de stratégies, des paramètres de fonctionnement du réseau public doivent être en permanence ajustés pour allouer dynamiquement au client les débits d'informations demandés.

L'autre famille de stratégies consiste à réserver de façon statique des ressources du réseau public pour créer le réseau virtuel.

Selon cette seconde approche, les paramètres de fonctionnement sont calculés à l'avance et sont indépendants des débits d'informations actuellement demandés pour relier les sites du client. Le procédé de détermination des paramètres de fonctionnement d'un réseau public proposé ici appartient à cette seconde famille de stratégies.

Pour résoudre ce problème d'allocation statique des ressources du réseau public, deux méthodes ont été proposées jusqu'à présent. La première méthode est connue sous le terme de modèle "Pipe". Selon cette méthode, le client doit spécifier la qualité de services souhaitée sous la forme d'une matrice indiquant quel est le débit maximal d'informations entre chaque paire de sites.

Ensuite, un algorithme permet de calculer en fonction de cette matrice et de la topologie du réseau public, des paramètres de fonctionnement du réseau public propres à réaliser un réseau virtuel correspondant à la qualité de services exprimée par le client. Par cette approche, pour un réseau virtuel reliant n sites, le client doit fournir $n^2$ - n débits maximaux d'informations.

Le modèle "Pipe" est peu flexible. En effet, il ne peut être mis en oeuvre que si les $n^2$ - n débits maximaux sont connus. Par conséquent, les variables d'entrée de ce modèle étant imposées, il peut s'avérer difficile d'exprimer, correctement et avec précision, la qualité de service souhaitée par le client, ce qui se traduit souvent par un surdimensionnement des ressources du réseau public à réserver à l'usage de ce client.

Duffield et al ont proposé, dans l'article "Duffield, N.G., P. Goyal, A. Greenberg, P. Mishra, K.K. Ramakrishnan, J.E. van der Merwe. 1998. A flexible model for resource management in virtual private networks. Proceedings ACM SIGCOMM", une autre méthode que le modèle "Pipe", connue sous les termes de modèle "Hose". Selon cette méthode, le client doit simplement indiquer pour spécifier la qualité de services qu'il souhaite les débits maximaux d'informations entrant et sortant pour chacun de ses sites.

Sous forme mathématique et dans le cas d'un réseau virtuel ayant n sites ou n points de raccordement, ceci s'exprime par les 2n inégalités suivantes :

Pour tout i appartenant à S :

2

$$\sum_{j \in S \backslash \{i\}} t_{ij} \leq t_i^{out}$$

$$\sum_{j \in S \backslash \{i\}} t_{ji} \leq t_i^{in}$$

ù :

- $t_{ij}$ est le débit d'informations demandé à partir du site i vers le site j,
- S est l'ensemble des n sites du réseau virtuel,

- $t_i^{out}$ est le débit maximal d'informations sortant du site i en direction de tous les autres sites du réseau virtuel, et

- $t_i^{in}$ est le débit maximal d'informations entrant transmis à partir des autres sites du réseau virtuel vers le site i.

Ensuite, un algorithme permet à partir de ces 2n inégalités et de la topologie du réseau public de déterminer les paramètres de fonctionnement du réseau public permettant de réaliser un réseau virtuel privé correspondant à la qualité de service exprimée par le client. Ce modèle présente le même manque de flexibilité que le modèle "Pipe" et donc le même risque de surdimensionnement des ressources à réserver. En effet, les 2n inégalités d'entrée utilisées pour définir la qualité de service souhaitée par le client sont également imposées par le modèle "Hose".

Ainsi, cette méthode s'avère-t-elle également peu pratique.

Un site d'un client peut éventuellement comporter plusieurs points de raccordement au réseau public. Or, la qualité de service demandée par un client doit être exprimée pour chacun des points de raccordement. Par conséquent, dans la suite de cette description, le terme de "points de raccordement " sera préféré à celui de "site du client".

Ainsi, l'invention vise à proposer un procédé de détermination des paramètres de fonctionnement d'un réseau principal de transmission d'informations pour créer dans celui-ci un réseau virtuel entre n points de raccordement, plus simple à mettre en oeuvre.

L'invention a donc pour objet un procédé de détermination des paramètres de fonctionnement d'un réseau principal de transmission d'informations tel que décrit ci-dessus, caractérisé en ce que l'étape d'établissement comporte une sous-étape de sélection desdites inégalités dans un catalogue d'inégalités possibles, et en ce que l'étape de calcul automatique est adaptée pour calculer les paramètres de fonctionnement en n'utilisant, parmi l'ensemble des inégalités possibles du catalogue, que les inégalités sélectionnées lors de la sous-étape de sélection.

Le procédé décrit ci-dessus permet de sélectionner dans un catalogue d'inégalités celles qui sont utilisées pour la détermination des paramètres de fonctionnement du réseau de transmission d'informations.

Ainsi, contrairement au modèle "Hose", l'utilisateur peut, par exemple, ne sélectionner et n'utiliser pour la détermination des paramètres de fonctionnement que des inégalités qui sont faciles à poser. Par exemple, l'utilisateur pourra sélectionner les débits maximaux entrant et sortant pour tous les sites où ceux-ci sont facilement estimables et ne pas introduire les débits maximaux entrant ou sortant pour certains de ses sites où ceux-ci sont difficiles à évaluer.

Ainsi, le procédé décrit ci-dessus s'avère-t-il plus simple à utiliser en pratique.

Suivant d'autres caractéristiques d'un procédé conforme à l'invention :

- le catalogue comporte plus de 2n + 1 inégalités possibles,
- chacune des contraintes établies lors de l'étape d'établissement est de la forme :

$$\sum_{i \in S} \sum_{j \in S \backslash \{i\}} \alpha_{ij} \, t_{ij} \otimes L_n$$

où :

- $\otimes$ est l'un des symboles choisi parmi les symboles $\leq$, $<$, $\geq$, $>$, =,
- $\alpha_{ij}$ est un coefficient de pondération choisi par l'utilisateur $\alpha_{ij} \in R^+$,
- S est l'ensemble des n points de raccordement du réseau virtuel,
- $t_{ij}$ est le débit d'informations demandé entre les points de raccordement i et j, et
- $L_n$ est une limite imposée par l'utilisateur à la combinaison pondérée des débits d'informations demandés,

- le réseau principal de transmission d'informations étant formé de noeuds reliés entre eux par des arcs de transmission d'informations, les paramètres de fonctionnement du réseau principal calculés sont des coefficients de répartition sur les arcs du réseau principal des débits d'informations demandés $t_{ij}$ entre les n points de raccordement du réseau virtuel, ainsi que le débit maximal d'informations à réserver sur ces arcs pour établir le réseau virtuel,
- l'étape de calcul automatique consiste à résoudre automatiquement un système d'inéquations comportant au moins les inéquations suivantes :

  - des inéquations définissant les coefficients de répartition des débits d'informations demandés sur les différents arcs du réseau principal,
  - des inéquations définissant le débit d'informations maximum à réserver sur chaque arc de transmission d'informations,
  - des inéquations exprimant la positivité des coefficients de répartition,
  - des inéquations exprimant l'obligation d'acheminer, entre chaque paire de points de raccordement du réseau virtuel, la totalité du débit d'informations demandé $t_{ij}$ entre cette paire de points de raccordement,

- l'étape de calcul automatique consiste à résoudre au moins les inéquations suivantes :

$$\sum_{p \in P(i,j), p \ni a} x_p^{ij} \quad \leq \quad x_a^{ij} \quad \forall i, j \in S, \quad \forall a \in A,$$

$$\sum_{i \in S} \sum_{j \in S \setminus \{i\}} x_a^{ij} \ t_{ij} \quad \leq \quad f_a \quad \quad \forall a \in A, \forall t \in D,$$

$$x_p^{ij} \geq 0 \quad \quad \forall p \in P(i,j), \forall i, j \in S,$$

$$x_p^{ij} \geq 0 \quad \quad \forall p \in P(i,j), \forall i, j \in S,$$

$$x_a^{ij} \geq 0 \quad \quad \forall a \in A, \forall i, j \in S,$$

$$\sum_{p \in P(i,j)} x_p^{ij} \quad \geq \quad 1 \quad \quad \forall i, j \in S.$$

où :

- P(i,j) est l'ensemble des chemins de transmission d'informations dans le réseau principal de transmission d'informations reliant les points de raccordement i et j,

- $x_p^{ij}$ est la proportion, appelée coefficient de répartition, du débit d'informations demandé $t_{ij}$ empruntant le

chemin p,

- S est l'ensemble des n points de raccordement du réseau virtuel,

- $x_a^{ij}$ est le coefficient de répartition du débit d'informations demandé $t_{ij}$ empruntant l'arc a,

- A est l'ensemble des arcs du réseau principal de transmission d'informations,
- $t_{ij}$ est le débit d'informations demandé du point de raccordement i vers le point de raccordement j,
- $f_a$ est le débit maximal d'informations à réserver sur l'arc a pour créer le réseau virtuel,
- t est le vecteur de l'espace $R^{|S|(|S|-1)}$ ayant pour coordonnées l'ensemble des $t_{ij}$, t étant défini par la relation t $= (t_{ij})_{i,j \in s}$, et représentant l'ensemble des débits d'informations demandés entre les n points de raccordement du réseau virtuel,
- D est le polytope mathématique défini lors de l'étape (30) d'établissement des contraintes sur les débits d'informations demandés,

- l'étape de calcul automatique consiste à résoudre le système d'inéquations comportant en plus des inéquations exprimant des contraintes de capacité de transmission d'informations selon lesquelles le débit maximal à réserver sur chaque arc est inférieur à la capacité de transmission de cet arc.
- l'étape de calcul automatique consiste à résoudre le système d'inéquations comportant en plus les inéquations suivantes :

$$ f_a \leq c_a \qquad \forall a \in A $$

où $c_a$ est la capacité maximale de transmission d'informations de l'arc a,
- l'étape de calcul automatique consiste à résoudre le système d'inéquations comportant en outre des contraintes sur la topologie du réseau virtuel selon lesquelles chaque chemin reliant une paire de points de raccordement du réseau virtuel se compose d'un nombre maximal d'arcs, ce nombre maximal d'arcs étant choisi par l'utilisateur,
- l'étape de calcul automatique consiste à résoudre le système d'inéquations comportant en outre des contraintes sur la topologie du réseau virtuel selon lesquelles chaque chemin reliant une paire de points de raccordement du réseau virtuel doit passer par un ou plusieurs noeuds particuliers du réseau principal, le ou les noeuds particuliers étant choisis par l'utilisateur,
- il comporte une étape d'expression d'un critère à optimiser, et l'étape de calcul automatique est adaptée en plus pour que les paramètres de fonctionnement calculés constituent un optimum du critère à optimiser,
- l'étape d'expression d'un critère consiste à exprimer un critère de coût à minimiser,
- le critère de coût à minimiser est de la forme :

$$ w^*(D) = \sum_{a \in A} w_a f_a $$

où :

- $w^*(D)$ est le critère à minimiser,
- $w_a$ est le coût d'une unité de débit d'informations sur l'arc a,
- $f_a$ est le débit maximal d'informations à réserver sur l'arc a pour créer le réseau virtuel,

- l'étape de calcul automatique comporte :

a) une sous-étape de détermination d'au moins un vecteur t, noté $\dot{t}_{r,}$ , correspondant à un sommet du polytope D et pour lequel l'ensemble des débits d'informations demandés $t_{ij}$ passant par un même arc a dépasse le débit maximal d'informations $f_a$ actuellement réservé sur cet arc, et

b) une sous-étape de résolution du système d'inéquations en ajoutant à celui-ci une nouvelle définition du débit maximal d'informations $f_a$ pour que l'ensemble des débits d'informations demandés correspondant à chaque

vecteur $\dot{t}_r$ (déterminé lors de l'étape a) puisse être acheminé sans dépassement du nouveau débit maximal d'informations $f_a$ déterminé à l'issue de cette sous-étape b),

- l'étape de calcul automatique comporte

    c) une sous-étape de sélection d'un nombre limité de chemins du réseau principal de transmission d'informations susceptibles d'être utilisés pour construire le réseau virtuel, et

    d) une sous-étape de résolution du système d'inéquations en recherchant une solution uniquement parmi les chemins sélectionnés lors de l'étape c),

- les étapes b) et d) sont réalisées en alternance,
- il comporte une étape de configuration du réseau public, en fonction des paramètres de fonctionnement déterminés, pour construire, dans ce réseau public, le réseau virtuel satisfaisant aux contraintes exprimées lors de l'étape d'établissement de contraintes.

L'invention a également pour objet un système de détermination de paramètres de fonctionnement d'un réseau principal de transmission d'informations pour créer, dans ce réseau principal, un réseau virtuel entre n points de raccordement à ce réseau principal, ces paramètres de fonctionnement étant statiques et indépendants de la quantité d'informations actuellement transportée sur le réseau principal et/ou sur le réseau virtuel, le système comportant un calculateur adapté pour :

- établir et mémoriser des contraintes sur les débits d'informations demandés entre les n points de raccordement, ces contraintes étant exprimées sous la forme d'inégalités mathématiques entre, d'une part, une combinaison de débits d'informations demandés, notés $t_{ij}$, entre des paires de points de raccordement du réseau virtuel, et, d'autre part, une limite imposée par l'utilisateur du système à la combinaison des débits d'informations, l'ensemble de ces inégalités mathématiques définissant un domaine borné à l'intérieur duquel doit se situer l'ensemble des débits d'informations demandés entre les n points de raccordement lors de l'utilisation du réseau virtuel, ce domaine étant un polytope D, et
- calculer automatiquement des paramètres de fonctionnement du réseau principal de transmission d'informations permettant d'établir le réseau virtuel satisfaisant aux contraintes établies à l'aide du calculateur,

caractérisé en ce que le calculateur est également adapté pour sélectionner, sous la commande d'un utilisateur lors de l'établissement des contraintes, lesdites inégalités dans un catalogue d'inégalités possibles et en ce que le calculateur est adapté pour effectuer le calcul automatique en n'utilisant, parmi les inégalités possibles, que les inégalités sélectionnées à l'aide du calculateur.

Suivant d'autres caractéristiques d'un système de détermination de paramètres de fonctionnement conforme à l'invention :

- le calculateur comporte :

    - des moyens de sélection, sous la commande de l'utilisateur, desdites inégalités dans le catalogue d'inégalités possibles, et
    - des moyens de calcul automatique des paramètres de fonctionnement du réseau principal de transmission d'informations permettant d'établir le réseau virtuel satisfaisant aux contraintes établies à l'aide du calculateur,

- les moyens de calcul automatiques comportent :

    - un générateur de nouveaux chemins de transmission d'informations susceptibles d'être utilisés pour construire le réseau virtuel, et
    - un générateur de nouvelles inéquations linéaires définissant la quantité de ressources du réseau principal à réserver pour construire le réseau virtuel.

L'invention sera mieux comprise à la lecture de la description qui va suivre, donnée uniquement à titre d'exemple et faite en se référant aux dessins, sur lesquels :

- la figure 1 représente une illustration d'un système de détermination de paramètres de fonctionnement d'un réseau conforme à l'invention ;
- la figure 2 est un organigramme d'un procédé de détermination des paramètres de fonctionnement d'un réseau de transmission d'informations conforme à l'invention ;
- la figure 3 est une illustration schématique de l'architecture d'un exemple de réseau de transmission d'informations ;
- les figures 4 et 5 sont des illustrations schématiques d'un réseau virtuel en cours d'élaboration à différents stades du procédé de détermination de la figure 1 ; et
- la figure 6 est un tableau de valeurs numériques utilisées pour illustrer le procédé de la figure 2 sur une application numérique.

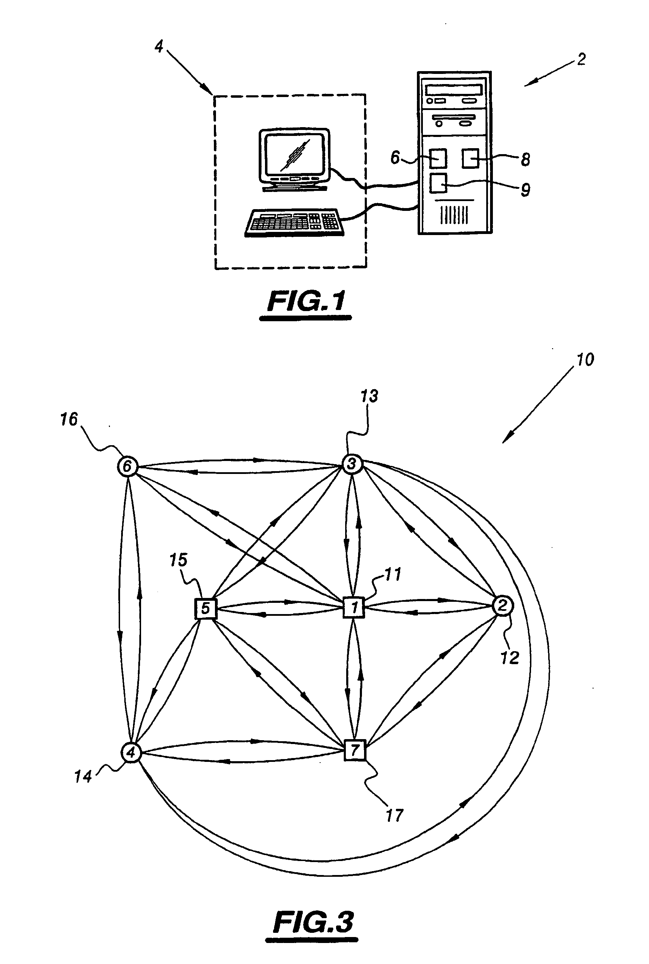

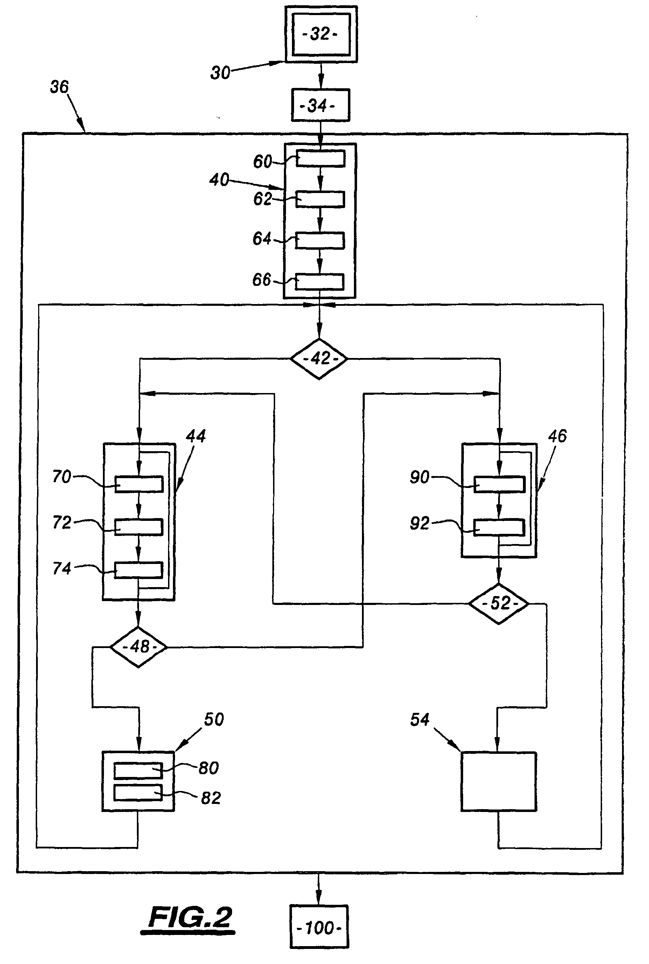

La figure 1 représente un calculateur électronique programmable 2 équipé d'une interface homme-machine 4, adapté pour exécuter le procédé de la figure 2. A cet effet, le calculateur comporte notamment des moyens 6 de traitement aptes à établir la solution d'un système d'inéquations tout en optimisant un critère à optimiser. Les inéquations sont, par exemple, linéaires ou non linéaires.

Les moyens de résolution d'un tel système d'inéquations sont connus. Par exemple, ces moyens mettent en oeuvre la méthode du Simplex : G.B. Dantzing "Linear Programming and Extensions", Princeton University Press, 1963.

Le calculateur 2 comporte également un générateur 8 de nouveaux chemins de transmission d'informations et un générateur 9 de nouvelles inéquations linéaires. L'intérêt de ces générateurs 8 et 9 apparaîtra à la lecture de la description qui va suivre.

Les algorithmes mis en oeuvre pour générer de nouveaux chemins de transmission d'informations et pour générer de nouvelles inéquations linéaires seront décrits plus en détail en regard du procédé de la figure 2.

Le calculateur est typiquement un ordinateur spécialement programmé pour réaliser le procédé de la figure 2.

Le procédé de la figure 2 représente un procédé de détermination des paramètres de fonctionnement d'un réseau public de transmission d'informations.

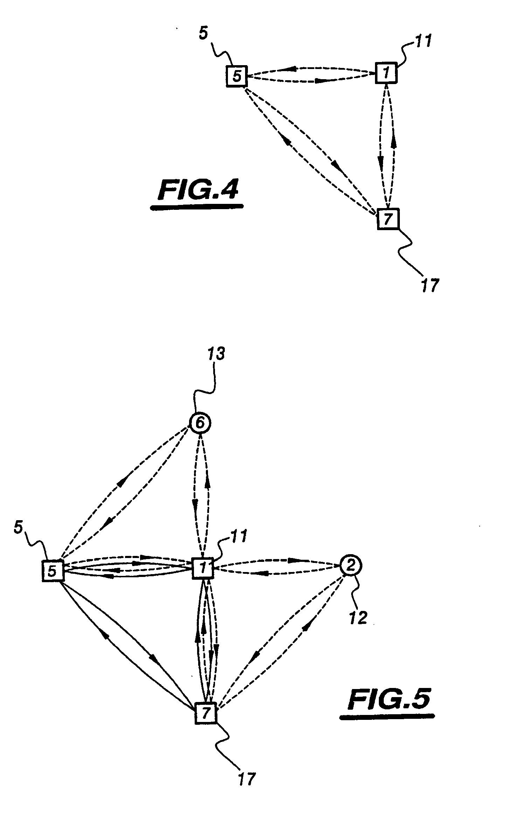

Des exemples d'utilisation de ce procédé et un exemple d'application numérique des différentes étapes de ce procédé sera donné dans le cas simplifié du réseau public de transmission d'informations représenté à la figure 3.

La figure 3 représente un réseau public 10 comportant sept noeuds 11 à 17 interconnectés entre eux par des arcs de transmission unidirectionnelle d'informations. Les noeuds 11 à 17 comportent chacun un numéro d'identification, ici respectivement de 1 à 7.

Chaque arc de transmission d'informations relie un seul noeud de départ à un seul noeud d'arrivée. De plus, chacun des arcs possède une capacité maximale de transmission d'informations, cette capacité maximale de transmission d'informations est, par exemple, exprimée en termes de "bande passante maximale utilisable" ou de "débit maximal d'informations transportable sur cet arc".

Cette capacité maximale de transmission d'informations sera notée :

$c_{(i,j)}$ où

- i est le numéro d'identification du noeud de départ, et
- j est le numéro d'identification du noeud d'arrivée.

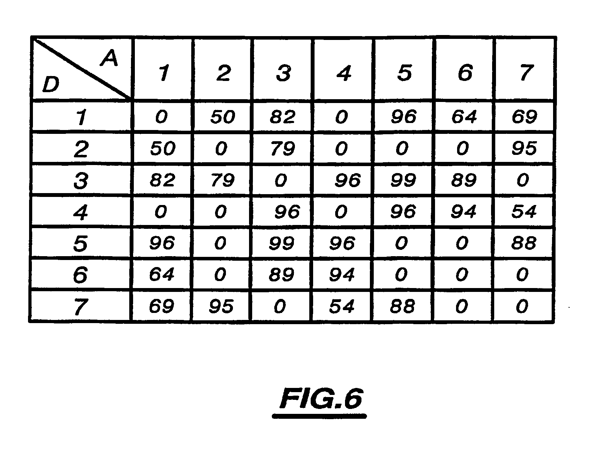

Les capacités de chacun des arcs représentés sur la figure 3 sont indiquées dans le tableau de la figure 6.

Dans le tableau de la figure 6, les capacités égales à 0 indiquent qu'il n'existe pas d'arc reliant ces noeuds d'arrivée et de départ.

L'exemple d'application numérique du procédé de la figure 2 sera décrit dans le cas particulier où le réseau virtuel que l'utilisateur souhaite créer comporte trois points de raccordement au réseau public. Ces trois points de raccordement sont respectivement situés au niveau des noeuds 11, 15 et 17. Pour distinguer ces noeuds 11, 15, 17 des autres noeuds, ils sont représentés par des carrés sur la figure 3.

Le procédé de la figure 2 débute par une étape 30 d'établissement de contraintes sur les débits d'informations demandés entre les différents points de raccordement du réseau virtuel.

Ces contraintes sont exprimées, par exemple, par des inégalités entre d'une part une combinaison linéaire et pondérée de débits d'informations demandés entre des paires de points de raccordement et d'autre part une limite constante imposée à cette combinaison.

Un débit d'informations demandé représente la demande de débit d'informations, à l'instant courant, entre une paire de points de raccordement lors de l'utilisation du réseau virtuel. Ce débit d'informations demandé est donc positif ou nul et variable en fonction du temps et de l'utilisation faite du réseau virtuel. Ce débit d'informations demandé n'est pas, en général, connu à l'avance et ne doit pas être confondu avec un débit maximal d'informations qui, lui, est constant au cours du temps.

Ces contraintes imposées par l'utilisateur sont toutes de la forme :

$$(1) \qquad \sum_{i \in S} \sum_{j \in S \setminus \{i\}} \alpha_{ij} \; t_{ij} \; \leq \; L_n$$

où :

- $\alpha_{ij}$ est un coefficient de pondération choisi par l'utilisateur, $\alpha_{ij} \in R^+$
- S est l'ensemble des n points de raccordement du réseau virtuel,
- $t_{ij}$ est le débit d'informations demandé du point de raccordement i vers le point de raccordement j, et
- $L_n$ est une limite imposée par l'utilisateur à la combinaison pondérée des débits d'informations demandés.

Les coefficients pondérés $\alpha_{ij}$ et les limites $L_n$ sont librement choisis par l'utilisateur du procédé.

Il existe donc une infinité d'inégalités possibles de la forme décrite ci-dessus. Cette infinité d'inégalités forme un catalogue comportant une infinité d'inégalités susceptibles d'être sélectionnées par l'utilisateur.

Une opération principale 32 de cette étape 30 consiste donc à sélectionner dans ce catalogue comportant une infinité d'inégalités possibles celles qui seront utilisées pour déterminer les paramètres de fonctionnement du réseau public. L'opération de sélection consiste par exemple à saisir, à l'aide de l'interface homme/machine 4, les inégalités sélectionnées par l'utilisateur de manière à les entrer dans le calculateur 2. Bien entendu, l'utilisateur doit sélectionner lors de cette opération au moins une inégalité.

L'ensemble des inégalités sélectionnées par l'utilisateur lors de l'opération 32 forme un premier système d'inéquations. L'ensemble des solutions de ce premier système d'inéquations doit former un polytope D dans l'espace $|R^n$ (espace des nombres réels à n dimensions). Un polytope peut être représenté par un nombre r de sommets. On définit un sommet comme étant un point qui ne peut pas être défini comme une combinaison convexe des autres points du polytope. Pour plus d'informations sur la théorie mathématique des polytopes, le lecteur peut se référer à l'ouvrage suivant : Nemhauser, G.L., L.A. Wolsey. 1988. "Integer and Combinatorial Optimization". Wiley.

Le polytope D ainsi défini correspond donc à un domaine à l'intérieur duquel doit se situer l'ensemble des débits d'informations demandés entre les points de raccordement du réseau virtuel.

Ce domaine est destiné à être traité lors des étapes suivantes du procédé de manière à obtenir finalement des paramètres de fonctionnement du réseau public qui permettent de créer un réseau virtuel satisfaisant aux contraintes imposées par l'utilisateur.

Ainsi, lors de l'opération 32, l'utilisateur doit définir le plus précisément possible les contraintes délimitant l'utilisation future du réseau virtuel. En effet, une surestimation des limites $L_n$ conduit à un surdimensionnement des ressources du réseau public à réserver pour ce réseau virtuel et donc à un gaspillage de ces mêmes ressources. Une sous-estimation des limites $L_n$ conduit, au contraire, à un sous-dimensionnement des ressources du réseau public à réserver. Un sous-dimensionnement des ressources du réseau public à réserver conduit à des situations dans lesquelles, lors de l'utilisation du réseau virtuel, les débits d'informations demandés sont supérieurs au débit maximal d'informations alloué pour ce réseau virtuel, ce qui se traduit par une détérioration des performances de transmission d'informations. Ainsi, contrairement aux systèmes existants, l'opération 32 permet à l'utilisateur d'exprimer toutes sortes de contraintes et donc de définir au plus juste les conditions d'utilisation du réseau virtuel.

Une première illustration d'expression de contraintes non exprimables à l'aide du modèle "Pipe" ou du modèle "Hose" sera donnée à l'aide de la figure 3. Pour cette première illustration, il est supposé que le réseau virtuel que l'utilisateur souhaite construire comporte quatre points de raccordement correspondant respectivement aux noeuds 11, 12, 15 et 17. Il est admis, dans le cadre de cette première utilisation, que les points de raccordement 11, 12, 15 et 17 sont respectivement localisés aux Etats-Unis, en Angleterre, au Canada et en France.

Dans le cadre de cette première illustration, il est admis que l'utilisateur souhaite utiliser le réseau virtuel pour réaliser des sessions de vidéoconférence entre le point de raccordement 11 et soit le point de raccordement 15, soit le point de raccordement 17. Chaque session de vidéo conférence nécessite un débit maximal de 10 Mbits par seconde. Il est également connu que le site raccordé au point de raccordement 12 n'étant pas équipé d'un système de vidéoconférence, une bande passante maximale de 2 Mbits par seconde, entre ce point de raccordement et les autres points de raccordement 11, 15 et 17 est suffisante.

L'utilisateur sélectionne donc, lors de l'opération 32, les inégalités suivantes :

$$(6) \qquad t_{1,5} + t_{1,7} \leq 10$$

$$(4) \qquad t_{7,2} + t_{5,2} + t_{1,2} \leq 2$$

$$(5) \qquad t_{2,7} + t_{2,5} + t_{2,1} \leq 2$$

et

$$(7) \qquad t_{5,1} + t_{7,1} \leq 10$$

Les inégalités 4 et 5 expriment les contraintes imposées par l'utilisateur sur le débit d'informations demandé entre le point de raccordement 12 et les autres points de raccordement.

Les inégalités 6 et 7 représentent la contrainte selon laquelle une cession de vidéoconférence n'est pas, en raison du décalage horaire, simultanément établie entre les noeuds 11, 15 et les noeuds 11, 17. Il est important de remarquer que les inégalités 6 et 7 précédentes ne peuvent pas être utilisées ni avec le modèle "Hose", ni avec le modèle "Pipe".

Ainsi, le polytope D défini lors de l'opération 32 par l'utilisateur est moins vaste que celui défini en utilisant le modèle "Hose" et permet donc d'éviter un surdimensionnement inutile des ressources du réseau public à réserver pour construire ce réseau virtuel.

De plus, la liaison de transmission d'informations entre le continent américain et l'Europe étant particulièrement coûteuse, l'utilisateur souhaite, dans le cadre de cette première illustration, limiter le débit maximal d'informations sur la liaison Amérique-Europe de manière à limiter les coûts d'exploitation de son réseau virtuel. Il sélectionne donc lors de l'opération 32 les deux inégalités supplémentaires suivantes :

$$(8) \qquad t_{1,2} + t_{1,7} + t_{5,2} + t_{5,7} \leq 12 \text{ et}$$

et

$$(9) \qquad t_{2,1} + t_{2,5} + t_{7,1} + t_{7,5} \leq 12.$$

Les inégalités 8 et 9 expriment la contrainte selon laquelle le débit maximal d'informations sur la liaison Amérique-Europe est limitée, dans les deux sens, à 12 mégabits par seconde.

De façon similaire à ce qui a déjà été dit en regard des inégalités 6 et 7, les inégalités 8 et 9 ne peuvent pas être prises en compte ni dans le modèle "Pipe", ni dans le modèle "Hose".

Dans le cadre d'une seconde illustration, qui sera utilisée par la suite pour donner des exemples d'application numérique du procédé de la figure 2, il est supposé que le réseau virtuel que souhaite établir l'utilisateur correspond à celui représenté sur la figure 3. Ce réseau virtuel comporte donc les points de raccordement 11, 15 et 17.

Dans cette seconde illustration, l'utilisateur n'impose, lors de l'opération 32, qu'une seule contrainte pour la conception du réseau virtuel. Cette unique contrainte correspond à un coût maximal à ne pas dépasser pour la réalisation et l'utilisation du réseau virtuel. A cet effet, il est connu que le coût par unité de débit d'informations entre les points de raccordement 11 et 15 est de l'ordre de 25 euros par unité de débit d'informations. De façon similaire, il est connu que le coût par unité de débit d'informations entre les points de raccordement 11 et 17 est de l'ordre de 38 euros tandis qu'il est de l'ordre de 45 euros entre les points de raccordement 15 et 17. L'utilisateur sélectionne donc, lors de l'opération 32, l'inégalité suivante :

$$(10) \qquad 25\, t_{15} + 38\, t_{17} + 25\, t_{51} + 45\, t_{57} + 38\, t_{71} + 45\, t_{75} \leq 3500.$$

D'autres méthodes pour définir des inégalités exprimant les contraintes sur les débits d'informations demandés sont possibles. Par exemple, l'utilisateur déduit de nouvelles inégalités à partir de mesures de débits d'informations entre les différents points de raccordement d'un réseau virtuel du client déjà existant.

Bien entendu, pour une situation particulière donnée, plusieurs des méthodes décrites ci-dessus, pour sélectionner les inégalités dans le catalogue, peuvent être successivement ou simultanément mises en oeuvre de manière à construire un polytope D définissant au plus juste les contraintes imposées au réseau virtuel.

Finalement, les débits d'informations, dans l'exemple de réalisation décrit ici, étant tous positifs le polytope D est également défini par les inégalités suivantes exprimant la positivité des débits d'informations :

$$(11) \qquad t_{15},\ t_{17},\ t_{51},\ t_{57},\ t_{71},\ t_{75}\ \geq\ 0.$$

Toutefois, les inégalités 11 sont prédéfinies et ne sont pas sélectionnées par l'utilisateur. Elles ne font donc pas partie du catalogue des inégalités sélectionnables.

Dans la suite de cette description, pour simplifier l'exemple d'application numérique, il est supposé que lors de l'opération 32 l'utilisateur n'a sélectionné que l'inégalité 10 précédente.

Ensuite, l'utilisateur procède à une étape 34 d'expression d'un critère à optimiser. Lors de cette étape l'utilisateur saisit à l'aide de l'interface homme-machine du calculateur un critère à optimiser de la forme suivante :

$$(12) \qquad w^*(D) \quad = \sum_{a \in A} w_a f_a$$

où :

- w*(D) est le critère à optimiser,
- $W_a$ est un coefficient de pondération de l'arc a,
- $f_a$ est le débit maximal d'informations à réserver ou à ne pas dépasser sur l'arc a pour créer le réseau virtuel, et
- A est l'ensemble des arcs a du réseau public.

Le critère w*(D) est soit un critère qu'il faut maximiser, soit un critère qu'il faut minimiser. Par exemple, le coefficient de pondération $w_a$ est un coût par unité de débit d'informations sur l'arc a. Le critère w*(D) représente donc un coût d'exploitation du réseau virtuel et doit être minimisé.

Cette étape 34 est facultative. En effet, il n'est pas nécessaire de rechercher à établir un réseau virtuel maximisant ou minimisant un critère.

Dans l'exemple d'application numérique décrit ici, aucun critère à optimiser n'est exprimé. Ainsi, dans ce cas-là, le procédé décrit ici établit simplement des paramètres de fonctionnement satisfaisant les contraintes exprimées lors de l'étape 30 sans rechercher à optimiser ces paramètres de fonctionnement vis-à-vis d'un critère.

Ensuite, l'utilisateur procède à une étape 36 de calcul automatique des paramètres de fonctionnement du réseau public permettant d'établir dans celui-ci un réseau virtuel satisfaisant aux contraintes exprimées lors de l'étape 30. Cette étape est donc destinée, connaissant les contraintes sur les débits d'informations exprimés lors de l'étape 30 et la topologie du réseau public à d'une part, déterminer des chemins de transmission d'informations à emprunter dans le réseau public pour relier les noeuds du réseau virtuel entre eux et d'autre part, à déterminer un débit maximal d'informations à réserver sur chacun des arcs formant ces chemins de transmission d'informations.

Par la suite, on note P(i,j) l'ensemble des chemins de transmission d'informations dans le réseau public reliant les points de raccordement i et j du réseau virtuel et $f_a$ le débit maximal d'informations à réserver ou à ne pas dépasser sur l'arc a pour créer ce réseau virtuel.

Les paramètres de fonctionnement du réseau public à déterminer pour connaître les chemins de transmission d'informations empruntés pour transporter les débits d'informations demandés $t_{ij}$ du réseau virtuel sont par exemple, pour chaque paire de points de raccordement du réseau virtuel, la proportion, appelée coefficient de répartition $x_a^{ij}$, , du débit d'informations demandé $t_{ij}$ empruntant l'arc a.

Les paramètres de fonctionnement à déterminer pour connaître les débits maximaux d'informations à réserver pour établir le réseau virtuel sont les débits maximaux d'informations $f_a$.

Un exemple de formulation mathématique du problème précédent est donné ci-dessous par un second système

d'inéquations :

$$(13) \qquad \sum_{p \in P(i,j), p \ni a} x_p^{ij} \quad \leq \quad x_a^{ij} \qquad \forall i,j \in S, \quad \forall a \in A,$$

$$(14) \qquad \sum_{i \in S} \sum_{j \in S\backslash\{i\}} x_a^{ij} \, t_{ij} \quad \leq \quad f_a \qquad \forall a \in A, \forall t \in D,$$

$$(15) \qquad f_a \quad \leq \quad c_a \qquad \forall a \in A,$$

$$(16) \qquad x_p^{ij} \quad \geq \quad 0 \qquad \forall p \in P(i,j), \forall i,j \in S,$$

$$(17) \qquad x_a^{ij} \quad \geq \quad 0 \qquad \forall a \in A, \forall i,j \in S.$$

où :

- $x_p^{ij}$ est la proportion du débit d'informations demandé entre les points de raccordement i et j empruntant le chemin p,
- S est l'ensemble des n points de raccordement du réseau virtuel,
- A est l'ensemble des arcs du réseau public de transmission d'informations,
- t est le vecteur de l'espace $R^{|S|(|S|-1)}$ ayant pour coordonnées l'ensemble des $t_{ij}$, t étant défini par la relation t = $(t_{ij})_{i,j \in s}$, et représentant l'ensemble des débits d'informations demandés entre les n points de raccordement du réseau virtuel,
- D est le polytope mathématique défini lors de l'étape 30,
- $c_a$ est la capacité maximale de transmission d'informations de l'arc a.

L'inéquation 13, respectivement l'inéquation 14, définit les coefficients de répartition $x_a^{ij}$, respectivement les débits maximaux d'informations $f_a$.

L'inéquation 15 est une contrainte imposée par la topologie du réseau public selon laquelle le débit maximal $f_a$ à réserver sur chaque arc a est inférieur à la capacité de transmission de cet arc.

Les inéquations 16 et 17 expriment, respectivement, la positivité des coefficients de répartition $x_p^{ij}$ et $x_a^{ij}$.

Le second système d'inéquations est complété par les inéquations suivantes :

$$(18) \qquad \sum_{p \in P(i,j)} x_p^{ij} \quad \geq \quad 1 \qquad \forall i,j \in S.$$

Ces inéquations expriment les contraintes selon lesquelles la totalité du débit d'informations demandé entre chaque paire de points de raccordement i, j du réseau virtuel doit être acheminée entre ces points de raccordement i et j. Chacune de ces inéquations pourrait être remplacée par une simple égalité entre le membre de droite et le membre de gauche. Ici, les coefficients de répartition $x_p^{ij}$ peuvent prendre une valeur quelconque dans l'ensemble des réels [O ; 1]. Ainsi, le débit $t_{ij}$ est partagé sur plusieurs chemins. La répartition sur plusieurs chemins de transmission d'informations du débit d'informations demandé entre une paire de points de raccordement du réseau virtuel permet d'augmenter la stabilité du réseau virtuel ainsi construit.

Le second système d'inéquations ainsi formulé semble difficile à résoudre. En effet, les inéquations 14 sont non linéaires et ce second système d'inéquations est donc non linéaire. Toutefois, ce second système d'inéquations peut être ramené à un système d'inéquations linéaires en ne considérant, pour les inéquations 14, que les sommets $t^*_r$ du polytope D. En effet, D étant un polytope, si les inéquations 14 sont satisfaites pour l'ensemble des sommets $t^*_r$, alors les inéquations 14 sont satisfaites quel que soit le vecteur t appartenant au polytope D.

Ainsi, le procédé objet de l'invention peut être mis en oeuvre à partir d'inéquations linéaires ou même non linéaires.

Pour résoudre ce second système d'inéquations l'étape de calcul automatique 36 comporte huit sous-étapes 40, 42, 44, 46, 48, 50, 52 et 54 principales.

L'utilisateur procède d'abord à la sous-étape 40 d'initialisation du calcul automatique. Cette sous-étape 40 comporte quatre opérations principales 60, 62, 64 et 66.

Lors de l'opération 60 l'utilisateur choisit un vecteur t quelconque appartenant au polytope D établi lors de l'étape 30.

Par exemple, dans le cas particulier du polytope D défini par les inégalités 10 et 11, l'utilisateur choisit un vecteur t = (1,1,1,1,1,1) noté $t_1$.

Lors de l'opération 62 l'utilisateur initialise un sous-ensemble $\bar{P}_k$ de chemins de transmission d'informations capable de transporter les débits d'informations demandés du vecteur $t_1$.

Pour le réseau public de la figure 3, et pour le vecteur $t_1$ établi plus haut, le sous-ensemble $\bar{P}_k$ comporte les chemins indiqués en pointillés sur la figure 4. La figure 4 représente, pour chaque paire de points de raccordement, deux arcs en pointillés, orientés en sens inverse l'un de l'autre, et reliant directement entre eux les deux points de raccordement de cette paire.

Ensuite, lors de l'opération 64, l'utilisateur initialise, éventuellement, un sous-ensemble $\bar{C}_k$ d'inéquations linéaires définissant chacune un débit maximal d'informations $f_a$ à réserver. Si, à ce stade du procédé, l'utilisateur connaît des inégalités linéaires définissant chacune un débit maximal d'informations $f_a$, il peut les introduire dans le sous-ensemble $\bar{C}_k$. Par exemple, à partir du vecteur $t_1$ défini plus haut et des inéquations 14, l'utilisateur introduit ici, dans le sous-ensemble $\bar{C}_k$, l'inéquations suivante :

$$\sum_{i \in S} \sum_{j \in S \setminus \{i\}} x_a^{ij} \, t_{ij} \quad \leq \quad f_a$$

où :

- t = $t_1$
- a appartient à l'intersection de l'ensemble A et des arcs utilisés pour créer les chemins de transmission d'informations de $\bar{P}_k$.

Il faut remarquer que, lorsque le sous-ensemble $\bar{C}_k$ ne comporte aucun élément à l'issue de l'opération 64, l'algorithme de calcul des paramètres de fonctionnement, décrits par la suite, risquent seulement de converger plus lentement vers une solution.

Finalement, lors de l'opération 66, l'utilisateur active les moyens de traitement 6 pour résoudre un troisième système d'inéquations $\bar{M}_k$ suivant :

$$\overline{M}_k \begin{cases} \text{Minimiser} \quad \sum_{a \in A} w_a f_a \\[2mm] \text{En respectant :} \\[2mm] \sum_{p \in P(i,j) \cap \overline{P}_k} x_p^{ij} \quad \geq \quad 1 \qquad\qquad \forall\, i,j \in S, \\[2mm] \sum_{p \in P(i,j) \cap \overline{P}_k,\, p \ni a} x_p^{ij} \quad \leq \quad x_a^{ij} \qquad \forall\, i,j \in S, \ \ \forall\, a \in A, \\[4mm] \sum_{i \in S} \sum_{j \in S \setminus \{i\}} x_a^{ij}\, t_{ij} \quad \leq \quad f_a \qquad \forall\, (a,t) \in (A \times D) \cap \overline{C}_k, \\[4mm] f_a \quad \leq \quad c_a \qquad\qquad \forall\, a \in A, \\[2mm] x_p^{ij} \quad \geq \quad 0 \quad \forall\, p \in P(i,j) \cap \mathcal{P}_k, \forall\, i,j \in S, \\[2mm] x_a^{ij} \quad \geq \quad 0 \qquad\qquad \forall\, a \in A, \forall\, i,j \in S. \end{cases}$$

où :

- $\overline{P}_k$ est le sous-ensemble de chemins de transmission d'informations reliant les points de raccordement du réseau virtuel entre eux, et
- $\overline{C}_k$ est le sous-ensemble d'inéquations linéaires définissant les débits maximaux d'informations $f_a$ à réserver.

Ce système d'inéquations $\overline{M}_k$ ne diffère principalement du deuxième système d'inéquations que par les inéquations 14 qui sont limitées à l'ensemble $\overline{C}_k$. La détermination de nouveaux sous-ensembles $\overline{P}_k$ et $\overline{C}_k$ sera décrite en détail ci-dessous. Ainsi, ce système d'inéquations $\overline{M}_k$ est un système d'inéquations linéaires qui est résolu par des méthodes connues telles que la méthode du Simplex : G.B. Dantzing "Linear Programming and Extensions", Princeton University Press, 1963. Le jeu de paramètres de fonctionnement obtenu à l'issue de cette opération est noté $(\overline{x}, \overline{f})$ où $\overline{x}$ est l'ensemble des coefficients de répartition $x_a^{ij}$ et $\overline{f}$ est l'ensemble des débits maximaux d'informations $f_a$.

Par la suite, chaque coefficient de répartition $x_a^{ij}$ et chaque débit maximal d'informations $f_a$, obtenus à l'issue de la résolution du système $\overline{M}_k$, sera noté respectivement $\overline{x}_a^{ij}$ et $\overline{f}_a$. Les $\overline{x}_a^{ij}$ et $f_a$ correspondent donc à la solution du système $\overline{M}_k$ définie lors d'une étape précédente et donc à une solution intermédiaire du problème à résoudre, tandis que $x_a^{ij}$ et $\overline{f}_a$ correspondent à la solution finale obtenue à l'issue de l'opération 36 de calcul automatique.

Dans le cas particulier de l'exemple d'application numérique décrit ici, le premier jeu de paramètres de fonctionnement obtenu est :

$$\overline{x}_{(i,j)}^{ij} = 0{,}5 \quad \forall\, i,j \in S,$$

$$\overline{f}_{(i,j)} = 1 \qquad \forall\, i, j \in S,$$

où :

- $\overline{x}^{ij}_{(i,j)}$ est le coefficient de répartition $\overline{x}^{ij}_a$ sur l'arc reliant le noeud i au noeud j, et

- $\overline{f}_{(i,j)}$ est le débit maximal d'informations $\overline{f}_a$ sur l'arc reliant le noeud i au noeud j.

Ensuite, le calculateur procède automatiquement à la sous-étape 42 de choix. Lors de cette sous-étape, le calculateur choisit entre procéder, à la sous-étape 44 pour ajouter de nouveaux chemins à $\overline{P}_k$, ou, à la sous-étape 46, pour ajouter de nouvelles inéquations linéaires à $\overline{C}_k$. Ce choix est prédéfini à l'avance de manière à exécuter cette sous-étape 42 automatiquement. Ici, le choix prédéfini à l'avance consiste à toujours procéder à la sous-étape 44.

Lors de cette sous-étape 44, le générateur 8 de nouveaux chemins est activé pour déterminer si de nouveaux chemins peuvent être ajoutés au sous-ensemble $\overline{P}_k$. Par exemple, l'algorithme utilisé ici, dans cet exemple de mode de réalisation, met en oeuvre la théorie de la dualité et l'algorithme de Dijkstra pour résoudre le problème du plus court chemin. Pour plus de détails, le lecteur pourra se référer aux ouvrages suivants, en ce qui concerne la théorie de la dualité :

- "Combinatorial Optimization", William J. Cook, William H. Cunningham, William R. Pulleyblank, Alexander Schrijver, Wiley-Interscience Series in Discrete Mathematics and Optimization",
- "Integer and Combinatorial Optimization", George L. Nemhauser, Laurence A. Wolsey, Wiley-Interscience Series in Discrete Mathematics and Optimization".

En ce qui concerne l'algorithme de Dijkstra, le lecteur pourra se référer à l'ouvrage suivant :

- Dijkstra, E.W. 1959. A note on two problems in connexion with graphs. Numerische Mathematik 1, 269-271.

En résumé, l'algorithme utilisé ici consiste à réitérer trois opérations 70, 72 et 74 pour chaque paire de points de raccordement du réseau virtuel, de manière à déterminer des nouveaux chemins susceptibles d'être utilisés pour transporter les débits $t_{ij}$.

L'opération 70 consiste à pondérer chaque arc appartenant à un chemin de transmission d'informations reliant le noeud i au noeud j par un coefficient de pondération $u^{ij}_a$. Ce coefficient de pondération $u^{ij}_a$ est la variable duale correspondant à l'inéquation 13 définissant $x^{ij}_a$. Le calcul d'une telle variable duale à partir d'une inéquation est un calcul connu établi par la théorie de la dualité.

L'opération 72 consiste à résoudre le problème du plus court chemin entre le noeud i et le noeud j en utilisant pour cela les coefficients de pondération $u^{ij}_a$ affectés à chacun des arcs et l'algorithme de Dijkstra.

L'opération 74 consiste à vérifier si l'inégalité suivante est vérifiée par le plus court chemin établi lors de l'opération 72 :

$$(19) \qquad v^{ij} \leq \sum_{a \in p} u^{ij}_a$$

où :

- $v^{ij}$ est la variable duale associée par la théorie de la dualité à l'inéquation 18 définissant l'obligation d'acheminer tout le débit d'informations demandé entre les points de raccordement i et j, et

- p est un chemin appartenant à P(i, j).

Si l'inégalité précédente n'est pas vérifiée un nouveau chemin susceptible d'être utilisé a été déterminé. Ce nouveau chemin est alors ajouté à ceux déjà contenus dans l'ensemble $\bar{P}_k$.

Dans le cas contraire, c'est-à-dire lorsque l'inégalité précédente est vérifiée, aucun nouveau chemin n'est ajouté à l'ensemble $\bar{P}_k$

Dans le cadre du réseau virtuel de la figure 3, la première exécution de la sous-étape 44 conduit à ajouter six nouveaux chemins reliant entre eux les noeuds 1, 5 et 7.

Sur la figure 5, les nouveaux chemins sont représentés en lignes pointillées tandis que les anciens chemins, déjà contenus dans $\bar{P}_k$, sont représentés en traits continus.

Sur cette figure, deux nouveaux chemins relient les noeuds 1 et 5 par l'intermédiaire du noeud 3, deux nouveaux chemins relient les noeuds 5 et 7 par l'intermédiaire du noeud 1 et deux nouveaux chemins relient les noeuds 1 et 7 par l'intermédiaire du noeud 2.

A l'issue de la sous-étape 44 le calculateur 2 procède automatiquement à la sous-étape 48 de test. Lors de cette sous-étape 48, le calculateur vérifie si de nouveaux chemins ont été ajoutés à l'ensemble $\bar{P}_k$. Dans la négative, le calculateur 2 procède automatiquement à la sous-étape 46.

Dans le cas contraire, c'est-à-dire si des nouveaux chemins ont été ajoutés à l'ensemble $\bar{P}_k$ le calculateur 2 procède automatiquement à la sous-étape 50. Lors de la sous-étape 50, le calculateur réalise automatiquement une opération 80 d'activation des moyens de traitement 6 pour résoudre le système d'inéquations $\bar{M}_k$. Lors de cette opération 80, le système d'inéquations $\bar{M}_k$ est résolu en prenant en compte les nouveaux chemins ajoutés à l'ensemble $\bar{P}_k$.

Si une solution a été établie pour le système d'inéquations $\bar{M}_k$ lors de l'opération 80, alors le calculateur procède automatiquement à la sous-étape 42 de choix.

Dans le cas où aucune solution n'a pu être trouvée pour le système d'inéquations $\bar{M}_k$ lors de l'opération 80, le calculateur procède automatiquement à une nouvelle opération 82 d'activation des moyens de traitement 6 pour résoudre un quatrième système d'inéquations $\bar{M}_k(\in)$ suivant :

$$
\overline{M}_k(\in)\begin{cases}
\text{Minimiser } \in \\[2mm]
\text{En respectant :} \\[2mm]
\displaystyle\sum_{p\in P(i,j)\cap\bar{P}_k} x_p^{ij} \geq 1 \qquad\qquad \forall\, i,j\in S, \\[4mm]
\displaystyle\sum_{p\in P(i,j)\cap\bar{P}_k,\, p\ni a} x_p^{ij} \leq x_a^{ij} \qquad \forall\, i,j\in S,\ \forall\, a\in A, \\[4mm]
\displaystyle\sum_{i\in S}\sum_{j\in S\backslash\{i\}} x_a^{ij}\, t_{ij} \leq f_a \qquad \forall\,(a,t)\in(A\times D)\cap\overline{C}_k, \\[4mm]
f_a \leq c_a + \in \qquad\qquad \forall\, a\in A, \\[2mm]
x_p^{ij} \geq 0 \qquad \forall\, p\in P(i,j)\cap\mathcal{P}_k, \forall\, i,j\in S, \\[2mm]
x_a^{ij} \geq 0 \qquad\qquad \forall\, a\in A, \forall\, i,j\in S, \\[2mm]
\in\ \geq 0.
\end{cases}
$$

Le système d'inéquations $\bar{M}_k(\in)$ est identique au système d'inéquations $\bar{M}_k$, à l'exception du fait que le critère que le calculateur cherche à optimiser est la capacité supplémentaire $\in$ à rajouter aux arcs du réseau public pour pouvoir réaliser un réseau virtuel satisfaisant aux contraintes exprimées lors de l'étape 30.

Si les moyens de traitement 6 ne trouvent pas une solution au système d'inéquations $\bar{M}_k(\in)$ même pour un $\in$ égal à l'infini, le procédé s'arrête immédiatement et le calculateur indique qu'il n'existe pas de chemins de transmission d'informations susceptibles de relier entre eux certains des points de raccordement du réseau virtuel. Si les moyens de traitement 6 trouvent une solution au système d'inéquations $\bar{M}_k(\in)$ pour laquelle $\in > 0$ alors, le calculateur établit, de façon itérative, de nouveaux chemins aptes à minimiser encore plus la capacité supplémentaire $\in$. De façon similaire à la résolution de $\bar{M}_k$, chaque itération comporte une opération de génération de nouveaux chemins, suivie d'une opération de résolution de $\bar{M}_k(\in)$ en tenant compte des nouveaux chemins générés lors de l'opération précédente. Lors de l'opération de génération de nouveaux chemins, le générateur 8 est activé pour générer des nouveaux chemins en tenant compte de la solution $(\bar{x}(\in), \bar{f}(\in))$ établie lors de la précédente résolution du système $\bar{M}_k(\in)$. Les nouveaux chemins ainsi déterminés sont ajoutés au sous-ensemble $\bar{P}_k$. Ensuite, lors de l'opération de résolution de $\bar{M}_k(\in)$, les moyens de traitement 6 sont activés pour résoudre, à nouveau, le système d'inéquations $\bar{M}_k(\in)$ en tenant compte des nouveaux chemins ajoutés lors de l'opération précédente.

Le processus itératif s'arrête lorsque l'une des deux situations suivantes est rencontrée.

La première situation correspond au cas où aucun nouveau chemin ne peut plus être généré par le générateur 8 et $\in$ est toujours strictement positif. Ainsi, dans cette situation, une solution, pour construire le réseau virtuel satisfaisant aux contraintes exprimées lors de l'étape 30, existe, mais nécessite une augmentation des capacités maximales de transmission d'informations d'au moins certains arcs. Lorsque cette situation est rencontrée, le calculateur indique cette situation à l'utilisateur par l'intermédiaire de l'interface homme/machine 4.

La seconde situation correspond au cas où, après avoir ajouté de nouveaux chemins, une solution, pour le système d'inéquations $\bar{M}_k(\in)$, a été établie et pour laquelle $\in = 0$. Il a donc été trouvé, moyennant l'ajout de nouveaux chemins de transmission d'informations au sous-ensemble $\bar{P}_k$, une solution ne nécessitant pas la mise en oeuvre de capacités supplémentaires de transmission d'informations sur les arcs du réseau public. Dans cette situation, le calculateur conserve, dans le sous-ensemble $\bar{P}_k$, les nouveaux chemins générés et procède ensuite automatiquement à la sous-étape 42 de choix pour poursuivre l'exécution du procédé.

Lors de la sous-étape 46 le générateur 9 de nouvelles inéquations linéaires à satisfaire est activé pour ajouter à $\bar{C}_k$ de nouvelles inéquations linéaires. Cette sous-étape 46 consiste à déterminer un ou plusieurs sommets du polytope D pour le ou lesquels le débit d'informations demandé sur l'arc a est supérieur au débit maximal d'informations réservé sur ce même arc.

A cet effet, le générateur 9 réalise par exemple les deux opérations principales 90 et 92 suivantes pour chaque arc a du réseau public.

L'opération 90 consiste à résoudre le cinquième système d'inéquations linéaires $P_a$ suivant pour déterminer un sommet du polytope D maximisant le débit d'informations demandé sur l'arc a :

$$P_a \begin{cases} \text{Maximiser} \quad \sum_{i \in S} \sum_{j \in S \backslash \{i\}} \bar{x}_a^{ij} \; t_{ij} \\ \\ \text{en respectant :} \\ \\ \qquad\qquad t \in D \end{cases}$$

Ce système d'inéquations $P_a$ est par exemple résolu en utilisant l'algorithme du Simplex. Le vecteur t* solution de ce système d'inéquations $P_a$ correspond à l'un des sommets du polytope D.

Ensuite, lors de l'opération 92 le générateur 9 vérifie si, pour le sommet t* déterminé lors de l'opération 90, l'inégalité suivante est satisfaite :

$$(20) \qquad \sum_{i \in S} \sum_{j \in S \backslash \{i\}} \bar{x}_a^{ij} \; \dot{t}_{ij} \leq \bar{f}_a$$

où :

- t*$_{ij}$ sont les coordonnées du sommet t* déterminées lors de l'opération 90,

- · $\overline{x}^{ij}_a$ et $\overline{f}_a$ sont respectivement les coefficients de répartition et le débit maximal d'informations à réserver déterminés précédemment soit lors de la sous-étape 50, soit lors de la sous-étape 54.

Si le vecteur t* vérifie l'inéquation 20 alors aucune nouvelle inéquation linéaire n'est ajoutée à l'ensemble $\overline{C}_k$.

Dans le cas contraire, c'est-à-dire si t* ne vérifie pas l'inéquation 20, l'inéquation linéaire suivante est ajoutée à l'ensemble $\overline{C}_k$ :

$$\sum_{i \in S} \sum_{j \in S \backslash \{i\}} x_a^{ij} \; \dot{t}_{ij} \; \leq \; f_a$$

Dans l'exemple d'application numérique décrit ici, la première exécution de la sous-étape 46 conduit à ajouter l'inéquation linéaire suivante :

$$140 \times x_{(1,5)}^{1,5} \leq f_{(1,5)}$$

où :

- $x_{(1,5)}^{1,5}$ est le coefficient de répartition $x_a^{1,5}$ pour l'arc reliant le noeud 1 au noeud 5,

- $f_{(1,5)}$ est le débit maximal $f_a$ à déterminer pour l'arc reliant le noeud 1 au noeud 5.

En effet, il est aisé de vérifier que le vecteur $\dot{t}_r$ = (140, 0, 0, 0, 0, 0) correspond à un sommet du polytope D et que l'inéquation 14, dans laquelle les coefficients de répartition $\overline{x}^{ij}_a$ et le débit maximal $\overline{f}_a$ ont les valeurs déterminées lors de la première exécution de la sous-étape 50, n'est pas vérifiée pour ce vecteur $\dot{t}_r$.

L'exécution de la sous-étape 46, pour les autres arcs du réseau public de la figure 3, conduit à ajouter les inéquations linéaires suivantes :

$$\text{arc } (5, 1) \qquad 140 \qquad \times \qquad x_{(5,1)}^{5,1} \leq f_{(5,1)}$$

$$\text{arc } (1, 7) \qquad 92,105 \qquad \times \qquad x_{(1,7)}^{1,7} \leq f_{(1,7)}$$

$$\text{arc } (7, 1) \qquad 92,105 \qquad \times \qquad x_{(7,1)}^{7,1} \leq f_{(7,1)}$$

$$\text{arc } (5, 7) \qquad 77,778 \qquad \times \qquad x_{(5,7)}^{5,7} \leq f_{(5,7)}$$

| arc (7, 5) | 77, 778 | × | $x_{(7,5)}^{7,5} \leq f_{(7,5)}$ |

Ensuite, le calculateur procède automatiquement à la sous-étape 52 de test. Lors de cette sous-étape 52 de test, le calculateur vérifie si de nouvelles inéquations linéaires ont été ajoutées à $\overline{C}_k$. Dans la négative, le calculateur procède automatiquement à la sous-étape 44 de détermination de nouveaux chemins à ajouter à $\overline{P}_k$.

Dans le cas contraire, c'est-à-dire si de nouvelles inéquations linéaires ont été ajoutées à $\overline{C}_k$, alors le calculateur procède automatiquement à la sous-étape 54.

Lors de la sous-étape 54, les moyens de traitement 6 sont de nouveau automatiquement activés pour résoudre le système d'inéquations $\overline{M}_k$. Cette sous-étape 54 est similaire à la sous-étape 50 et ne sera donc pas décrite de nouveau en détails. Il faut noter cependant que lors de la sous-étape 54, le système d'inéquations $\overline{M}_k$ est résolu pour un sous-ensemble $\overline{C}_k$ contenant les nouvelles inéquations déterminées lors de la sous-étape 46.

A l'issue de la sous-étape 54, le calculateur retourne automatiquement à l'étape de choix 42.

L'étape 36 de calcul s'achève lorsqu'il n'est plus possible de déterminer de nouvelles inéquations linéaires à ajouter à $\overline{C}_k$ et de nouveaux chemins à ajouter à $\overline{P}_k$ ou lorsqu'il a été établi que les capacités maximales de transmission d'informations des arcs sont insuffisantes pour réaliser un réseau virtuel satisfaisant aux contraintes exprimées lors de l'étape 30 ou lorsqu'il a été établi qu'il n'existe pas de chemins de transmission d'informations entre certains points de raccordement.

Il faut remarquer que l'enchaînement des sous-étapes 42, 44, 46, 48, 50, 52 et 54 converge nécessairement vers une solution puisque :

- le nombre de chemins de transmission d'informations qui peuvent être générés lors de la sous-étape 44 est fini,
- les nouveaux chemins générés lors de la sous-étape 44 sont différents des chemins déjà existants dans $\overline{P}_k$,
- le nombre de sommets du polytope D est fini, et
- aucune nouvelle inéquation linéaire ajoutée à $\overline{C}_k$ ne peut l'être plus d'une fois.

Pour le réseau virtuel de la figure 3 et pour les contraintes 10 et 11 exprimées lors de l'étape 30, le calculateur établit les solutions suivantes, dans le cadre de l'application numérique décrite ici :

$$f_{(1,5)} = 92{,}105263$$

$$f_{(5,1)} = 95{,}789474$$

$$f_{(1,7)} = 47{,}894737$$

$$f_{(7,1)} = 44{,}210526$$

$$f_{(7,5)} = 47{,}894737$$

$$f_{(5,7)} = 44{,}210526$$

0,657895 % du débit d'informations demandé $t_{(1,5)}$ emprunte le chemin allant directement du noeud 11 au noeud 15.

0,342105 % du débit d'informations demandé $t_{(1,5)}$ emprunte le chemin allant du noeud 11 au noeud 15 en passant par le noeud 17.

0,52 % du débit d'informations demandé $t_{(1,7)}$ emprunte le chemin allant directement du noeud 1 au noeud 7.

0,48 % du débit d'informations demandé $t_{(1,7)}$ emprunte le chemin allant du noeud 11 au noeud 17 en passant par le noeud 15.

0,684211 % du débit d'informations demandé $t_{(5,1)}$ emprunte le chemin allant directement du noeud 15 au noeud 11.

0,315789 % du débit d'informations demandé $t_{(5,1)}$ emprunte le chemin allant du noeud 15 au noeud 11 en passant par le noeud 17.

0,384211 % du débit d'informations demandé $t_{(5,7)}$ emprunte le chemin allant directement du noeud 15 au noeud 17.

0,615789 % du débit d'informations demandé $t_{(5,7)}$ emprunte le chemin allant du noeud 15 au noeud 17 en passant par le noeud 11.

0,48 % du débit d'informations demandé $t_{(7,1)}$ emprunte le chemin allant directement du noeud 17 au noeud 11.

0,52 % du débit d'informations demandé $t_{(7,1)}$ emprunte le chemin allant du noeud 17 au noeud 11 en passant par le noeud 15.

0,615789 % du débit d'informations demandé $t_{(7,5)}$ emprunte le chemin allant directement du noeud 17 au noeud 15.

0,384211 % du débit d'informations demandé $t_{(7,5)}$ emprunte le chemin allant du noeud 17 au noeud 11 en passant par le noeud 15.

Les chemins et les proportions de débits d'informations demandés $t_{ij}$ empruntant ces chemins sont établis directement à partir des coefficients de répartition $x_a^{ij}$ correspondants obtenus à l'issue de la dernière résolution du système d'inéquations $\bar{M}_k$.

A l'issue de l'étape 36, une étape 100 de configuration du réseau public, en fonction des paramètres de fonctionnement précédemment déterminés, est réalisée pour construire, dans ce réseau public, le réseau virtuel satisfaisant aux contraintes exprimées lors de l'étape 30. Cette opération est, par exemple, réalisée de façon classique par un opérateur du réseau public.

Finalement, il a été démontré que, pour un réseau virtuel comportant n points de raccordement, le mode de réalisation décrit ici peut réduire jusqu'à un facteur 1/(n x (n-1)) les coûts d'acheminement d'informations par rapport à un réseau virtuel établi à l'aide du modèle "Pipe" entre ces mêmes points de raccordement.

Le mode de réalisation de l'étape 30 a été décrit, ici, dans le cas particulier où les inégalités exprimant les contraintes imposées par l'utilisateur pour créer le réseau virtuel sont toutes de la forme :

$$(1) \qquad \sum_{i \in S} \sum_{j \in S \setminus \{i\}} \alpha_{ij} \; t_{ij} \; \leq \; L_n$$

Toutefois, en variante, des combinaisons linéaires pondérées de débits d'informations demandés, supérieures à une limite $L_n$, peuvent également être utilisées et font donc partie du catalogue. En utilisant les mêmes notations que pour les inégalités 1, celles-ci sont de la forme :

$$(20) \qquad \sum_{i \in S} \sum_{j \in S \setminus \{i\}} \alpha_{ij} \; t_{ij} \qquad \geq \; L_n$$

Ainsi, dans cette variante, l'utilisateur sélectionne des combinaisons pondérées de débits d'informations demandés supérieures et/ou inférieures chacune à une limite $L_n$. Toutefois, lorsque des inégalités de la forme de l'inégalité 20 sont sélectionnées par l'utilisateur pour définir les contraintes imposées au réseau virtuel, l'utilisateur doit veiller à ce que l'ensemble des inégalités sélectionnées définit un polytope mathématique, c'est-à-dire un domaine borné. En effet, le procédé de la figure 2 s'applique uniquement à partir du moment où l'ensemble des inégalités sélectionnées lors de l'opération 32 forme un domaine borné. Dans cette variante, les autres étapes du procédé de détermination des paramètres de fonctionnement sont identiques aux étapes 34, 36 et 100 décrites précédemment.

Toujours dans cette même variante, le catalogue comporte également des égalités entre une combinaison linéaire pondérée de débits d'informations demandés et une limite $L_n$. En utilisant les mêmes notations que pour l'inégalité 1, ces inégalités sont de la forme :

$$(21) \quad \sum_{i \in S} \sum_{j \in S \setminus \{i\}} \alpha_{ij} \quad t_{ij} \ = \ \mathsf{L_n}$$

La sélection d'une égalité, lors de l'opération 32 à la place d'une inégalité, ne modifie en rien le procédé de calcul automatique des paramètres de fonctionnement de cette variante. En effet, chaque égalité de la forme de l'égalité 21 se décompose en une inégalité de la forme de l'inégalité 1 et en une inégalité de la forme de l'inégalité 20.

Le mode de réalisation du procédé de la figure 2 a été décrit ici dans le cas particulier où le réseau public est représenté par des noeuds reliés entre eux par des arcs dirigés. En variante, le réseau public est représenté par des noeuds reliés par des arcs non dirigés.

Dans une variante, les variables $t_{ij}$ représentant les débits d'informations demandés ne sont pas orientées. Ainsi, une même variable $t_{ij}$ représente aussi bien le débit d'informations demandé du point de raccordement i vers le point de raccordement j, que l'inverse. Cette variante permet de réduire le nombre de variables utilisées pour déterminer les paramètres de fonctionnement du réseau public. Le procédé de détermination des paramètres de fonctionnement, dans cette variante, découle directement de celui décrit en regard de la figure 2.

Dans une autre variante, le critère exprimé lors de l'étape 34 est un critère visant à optimiser les coûts d'utilisation d'au moins certains noeuds du réseau public. Par exemple, le critère sera de la forme suivante :

$$\mathsf{w^*(D)} \qquad = \sum_{a \in A} Z_a \, x_a^{ij}$$

où :

- w*(D) est le critère optimisé,
- $Z_a$ est un coefficient proportionnel au coût d'exploitation des noeuds situés à chaque extrémité de l'arc a,
- $x_a^{ij}$ est le coefficient de répartition du débit $t_{ij}$ sur l'arc a.

Bien entendu, le critère exprimé lors de l'étape 34 peut combiner des éléments fonction du coût d'exploitation des arcs et du coût d'exploitation des noeuds du réseau virtuel.

Les capacités maximales de transmission des arcs du réseau public sont généralement très nettement supérieures au débit maximal d'informations $f_a$ à réserver pour créer un réseau virtuel. Par conséquent, en variante, les capacités maximales des arcs du réseau public sont prises égales à l'infini, ce qui revient à supprimer les inéquations 15. Le procédé de détermination des paramètres de fonctionnement du réseau public, dans ce cas là, découle de celui décrit en regard de la figure 2. Seul le système d'inéquations $\bar{M}_k$ s'en trouve simplifié.

En variante, le générateur 8 de nouveaux chemins et la sous-étape 44 de détermination des nouveaux chemins sont modifiés pour n'établir que des nouveaux chemins formés au maximum par $l_{max}$ arcs du réseau public. L'algorithme de résolution du problème du plus court chemin utilisé dans cette variante sera alors l'algorithme décrit dans le document suivant : "Ben-Ameur, W. 1999. Optimisation et Sécurisation de réseaux. PhD. Dissertation, ENST Paris, Europe".

Dans une autre variante, le générateur 8 de nouveaux chemins est modifié pour ne générer que des nouveaux chemins passant par des noeuds spécifiés à l'avance du réseau public. Ces noeuds seront par exemple des noeuds ayant des fonctions particulières dans le réseau public, telle qu'une fonction de facturation. Dans cette variante, l'algorithme, pour résoudre le problème du plus court chemin utilisé, est alors celui décrit dans le document suivant : "Ben-Ameur, W. 1999. Optimisation et Sécurisation de réseaux. PhD. Dissertation, ENST Paris, Europe".

Le procédé a été décrit ici dans le cadre d'un réseau public de transmission d'informations. Toutefois, ce procédé peut, bien évidemment, être mis en oeuvre dans n'importe quel type de réseau de transmission d'informations, qu'il soit privé ou public. De plus, il est indépendant de l'architecture matérielle du réseau et ne nécessite qu'une représentation sous forme de noeuds et d'arcs de ce réseau.

En variante, le nombre d'inégalités contenues dans le catalogue décrit en regard de l'opération 32 est modifié pour ne contenir qu'un nombre limité et prédéfini d'inégalités sélectionnables. Ce nombre d'inégalités prédéfini sera avantageusement supérieur à 2n+1 ou à $n^2$-n+1, n étant le nombre de points de raccordement du réseau virtuel. En effet, plus ce nombre est grand, plus l'utilisateur peut définir au plus juste ses besoins en terme de qualité de service.

Le procédé de la figure 2 a été décrit dans le cas particulier où le choix réalisé lors de la sous-étape 42 consiste à systématiquement procéder à la sous-étape 44 de détermination de nouveaux chemins à ajouter. En variante, d'autres stratégies de fonctionnement du procédé de la figure 2 sont possibles. Par exemple, la sous-étape de choix 42 est remplacée par une sous-étape de choix consistant à alterner une exécution de la sous-étape 44 et une exécution de la sous-étape 46. Dans un autre exemple, la sous-étape de choix 42 est remplacée par une sous-étape de choix consistant à exécuter systématiquement la sous-étape 46.

**Revendications**

1. Procédé de détermination des paramètres de fonctionnement d'un réseau principal (10) de transmission d'informations pour créer dans ce réseau principal (10) un réseau virtuel entre n points de raccordement à ce réseau principal, ces paramètres de fonctionnement étant statiques et indépendants de la quantité d'informations actuellement transportée sur le réseau principal et/ou sur le réseau virtuel,
le procédé comportant :

   - une étape (30) d'établissement de contraintes sur les débits d'informations demandés entre les n points de raccordement, ces contraintes étant exprimées sous la forme d'inégalités mathématiques entre, d'une part, une combinaison de débits d'informations demandés, notés $t_{ij}$, entre des paires de points de raccordement du réseau virtuel, et, d'autre part, une limite imposée par l'utilisateur à la combinaison des débits d'informations, l'ensemble de ces inégalités mathématiques définissant un domaine borné à l'intérieur duquel doit se situer l'ensemble des débits d'informations demandés entre les n points de raccordement lors de l'utilisation du réseau virtuel, ce domaine étant un polytope D, et
   - une étape (36) de calcul automatique des paramètres de fonctionnement du réseau principal (10) de transmission d'informations permettant d'établir le réseau virtuel satisfaisant aux contraintes exprimées lors de l'étape d'établissement,

   **caractérisé en ce que** l'étape d'établissement (30) comporte une sous-étape (32) de sélection desdites inégalités dans un catalogue d'inégalités possibles, et **en ce que** l'étape (36) de calcul automatique est adaptée pour calculer les paramètres de fonctionnement en n'utilisant, parmi l'ensemble des inégalités possibles du catalogue, que les inégalités sélectionnées lors de la sous-étape de sélection.

2. Procédé selon la revendication 1, **caractérisé en ce que** le catalogue comporte plus de 2n + 1 inégalités possibles.

3. Procédé selon la revendication 1 ou 2, **caractérisé en ce que** chacune des contraintes établies lors de l'étape d'établissement (30) est de la forme :

$$\sum_{i \in S} \sum_{j \in S \setminus \{i\}} \alpha_{ij} \; t_{ij} \quad \otimes \quad \mathsf{L_n}$$

où :

   - $\otimes$ est est l'un des symboles choisi parmi les symboles $\leq$ , <, $\geq$, >, =,
   - $\alpha_{ij}$ est un coefficient de pondération choisi par l'utilisateur $\alpha_{ij} \in |R^+$,
   - S est l'ensemble des n points de raccordement du réseau virtuel,
   - $t_{ij}$ est le débit d'informations demandé entre les points de raccordement i et j, et
   - $L_n$ est une limite imposée par l'utilisateur à la combinaison pondérée des débits d'informations demandés.

4. Procédé selon l'une quelconque des revendications précédentes, **caractérisé en ce que** le réseau principal de transmission d'informations étant formé de noeuds reliés entre eux par des arcs de transmission d'informations, les paramètres de fonctionnement du réseau principal calculés sont des coefficients de répartition sur les arcs du réseau principal des débits d'informations demandés $t_{ij}$ entre les n points de raccordement du réseau virtuel, ainsi que le débit maximal d'informations à réserver sur ces arcs pour établir le réseau virtuel.

5. Procédé selon la revendication 4, **caractérisé en ce que** l'étape (36) de calcul automatique consiste à résoudre automatiquement un système d'inéquations comportant au moins les inéquations suivantes :

   - des inéquations définissant les coefficients de répartition des débits d'informations demandés sur les différents arcs du réseau principal,
- des inéquations définissant le débit d'informations maximum à réserver sur chaque arc de transmission d'informations,
- des inéquations exprimant la positivité des coefficients de répartition,
- des inéquations exprimant l'obligation d'acheminer, entre chaque paire de points de raccordement du réseau virtuel, la totalité du débit d'informations demandé $t_{ij}$ entre cette paire de points de raccordement.

6. Procédé selon la revendication 5, **caractérisé en ce que** l'étape (36) de calcul automatique consiste à résoudre au moins les inéquations suivantes :

$$\sum_{p \in P(i,j), p \ni a} x_p^{ij} \;\leq\; x_a^{ij} \quad \forall i,j \in S, \;\; \forall a \in A,$$

$$\sum_{i \in S} \sum_{j \in S \setminus \{i\}} x_a^{ij} \; t_{ij} \;\leq\; f_a \quad \forall a \in A, \forall t \in D,$$

$$x_p^{ij} \geq 0 \quad \forall p \in P(i,j), \forall i,j \in S,$$

$$x_a^{ij} \geq 0 \quad \forall a \in A, \forall i,j \in S,$$

$$\sum_{p \in P(i,j)} x_p^{ij} \geq 1 \quad \forall i,j \in S.$$

où:

- $P(i,j)$ est l'ensemble des chemins de transmission d'informations dans le réseau principal de transmission d'informations reliant les points de raccordement i et j,

- $x_p^{ij}$ est la proportion, appelée coefficient de répartition, du débit d'informations demandé $t_{ij}$ empruntant le chemin p,
- S est l'ensemble des n points de raccordement du réseau virtuel,

- $x_a^{ij}$ est le coefficient de répartition du débit d'informations demandé $t_{ij}$ empruntant l'arc a,
- A est l'ensemble des arcs du réseau principal de transmission d'informations,
- $t_{ij}$ est le débit d'informations demandé du point de raccordement i vers le point de raccordement j,
- $f_a$ est le débit maximal d'informations à réserver sur l'arc a pour créer le réseau virtuel,
- t est le vecteur de l'espace $R^{|S|(|S|-1)}$ ayant pour coordonnées l'ensemble des $t_{ij}$, t étant défini par la relation t = $(t_{ij})_{i,j \in S}$, et représentant l'ensemble des débits d'informations demandés entre les n points de raccordement du réseau virtuel, et
- D est le polytope mathématique défini lors de l'étape (30) d'établissement des contraintes sur les débits d'informations demandés.

7. Procédé selon la revendication 5 ou 6, **caractérisé en ce que** l'étape (36) de calcul automatique consiste à résoudre le système d'inéquations comportant en plus des inéquations exprimant des contraintes de capacité de transmission d'informations selon lesquelles le débit maximal à réserver sur chaque arc est inférieur à la capacité de transmission de cet arc.

**8.** Procédé selon la revendication 7, **caractérisé en ce que** l'étape (36) de calcul automatique consiste à résoudre le système d'inéquations comportant en plus les inéquations suivantes :

$$ f_a \leq c_a \qquad \forall a \in A $$

où $c_a$ est la capacité maximale de transmission d'informations de l'arc a.

**9.** Procédé selon l'une quelconque des revendications 5 à 8 **caractérisé en ce que** l'étape (36) de calcul automatique consiste à résoudre le système d'inéquations comportant en outre des contraintes sur la topologie du réseau virtuel selon lesquelles chaque chemin reliant une paire de points de raccordement du réseau virtuel se compose d'un nombre maximal d'arcs, ce nombre maximal d'arcs étant choisi par l'utilisateur.

**10.** Procédé selon l'une quelconque des revendications 5 à 9, **caractérisé en ce que** l'étape (36) de calcul automatique consiste à résoudre le système d'inéquations comportant en outre des contraintes sur la topologie du réseau virtuel selon lesquelles chaque chemin reliant une paire de points de raccordement du réseau virtuel doit passer par un ou plusieurs noeuds particuliers du réseau principal, le ou les noeuds particuliers étant choisis par l'utilisateur.

**11.** Procédé selon l'une quelconque des revendications précédentes, **caractérisé en ce qu'**il comporte une étape (34) d'expression d'un critère à optimiser, et en ce que l'étape (36) de calcul automatique est adaptée en plus pour que les paramètres de fonctionnement calculés constituent un optimum du critère à optimiser.

**12.** Procédé selon la revendication 11, **caractérisé en ce que** l'étape (34) d'expression d'un critère consiste à exprimer un critère de coût à minimiser.

**13.** Procédé selon la revendication 12, **caractérisé en ce que** le critère de coût à minimiser est de la forme :

$$ w^*(D) = \sum_{a \in A} w_a f_a $$

où :

- $w^*(D)$ est le critère à minimiser,
- $w_a$ est le coût d'une unité de débit d'informations sur l'arc a,
- $f_a$ est le débit maximal d'informations à réserver sur l'arc a pour créer le réseau virtuel.

**14.** Procédé selon l'une quelconque des revendications 5 à 13, **caractérisé en ce que** l'étape (36) de calcul automatique comporte :

a) une sous-étape (46) de détermination d'au moins un vecteur t, noté $\dot{t}_r$, correspondant à un sommet du polytope D et pour lequel l'ensemble des débits d'informations demandés $t_{ij}$ passant par un même arc a dépasse le débit maximal d'informations $f_a$ actuellement réservé sur cet arc, et

b) une sous-étape (54) de résolution du système d'inéquations en ajoutant à celui-ci une nouvelle définition du débit maximal d'informations $f_a$ pour que l'ensemble des débits d'informations demandés correspondant à chaque vecteur $\dot{t}_r$ déterminé lors de l'étape a) puisse être acheminé sans dépassement du nouveau débit maximal d'informations $f_a$ déterminé à l'issue de cette sous-étape b).

**15.** Procédé selon la revendication 14, **caractérisé en ce que** l'étape (36) de calcul automatique comporte :

c) une sous-étape (44) de sélection d'un nombre limité de chemins du réseau principal de transmission d'informations susceptibles d'être utilisés pour construire le réseau virtuel, et

d) une sous-étape (50) de résolution du système d'inéquations en recherchant une solution uniquement parmi les chemins sélectionnés lors de l'étape c).

**16.** Procédé selon la revendication 15, **caractérisé en ce que** les étapes b) et d) sont réalisées en alternance.

**17.** Procédé selon l'une quelconque des revendications précédentes, **caractérisé en ce qu'**il comporte une étape (100) de configuration du réseau public, en fonction des paramètres de fonctionnement déterminés, pour construire, dans ce réseau public, le réseau virtuel satisfaisant aux contraintes exprimées lors de l'étape (30) d'établissement de contraintes.

**18.** Système de détermination des paramètres de fonctionnement d'un réseau principal (10) de transmission d'informations pour créer, dans ce réseau principal (10), un réseau virtuel entre n points de raccordement à ce réseau principal, ces paramètres de fonctionnement étant statiques et indépendants de la quantité d'informations actuellement transportée sur le réseau principal et/ou sur le réseau virtuel, le système comportant un calculateur (2) adapté pour :

- établir et mémoriser des contraintes sur les débits d'informations demandés entre les n points de raccordement, ces contraintes étant exprimées sous la forme d'inégalités mathématiques entre, d'une part, une combinaison de débits d'informations demandés, notés $t_{ij}$, entre des paires de points de raccordement du réseau virtuel, et, d'autre part, une limite imposée par l'utilisateur du système à la combinaison des débits d'informations, l'ensemble de ces inégalités mathématiques définissant un domaine borné à l'intérieur duquel doit se situer l'ensemble des débits d'informations demandés entre les n points de raccordement lors de l'utilisation du réseau virtuel, ce domaine étant un polytope D, et
- calculer automatiquement des paramètres de fonctionnement du réseau principal (10) de transmission d'informations permettant d'établir le réseau virtuel satisfaisant aux contraintes établies à l'aide du calculateur (2),

**caractérisé en ce que** le calculateur (2) est également adapté pour sélectionner, sous la commande d'un utilisateur lors de l'établissement des contraintes, lesdites inégalités dans un catalogue d'inégalités possibles et **en ce que** le calculateur (2) est adapté pour effectuer le calcul automatique en n'utilisant, parmi les inégalités possibles, que les inégalités sélectionnées à l'aide du calculateur (2).

**19.** Système selon la revendication 18, **caractérisé en ce que** le calculateur (2) comporte :

- des moyens de sélection, sous la commande de l'utilisateur, desdites inégalités dans le catalogue d'inégalités possibles, et
- des moyens (6, 8, 9) de calcul automatique des paramètres de fonctionnement du réseau principal (10) de transmission d'informations permettant d'établir le réseau virtuel satisfaisant aux contraintes établies à l'aide du calculateur (2).

**20.** Système selon la revendication 19, **caractérisé en ce que** les moyens de calcul automatiques comportent :

- un générateur (8) de nouveaux chemins de transmission d'informations susceptibles d'être utilisés pour construire le réseau virtuel, et
- un générateur (9) de nouvelles inéquations linéaires définissant là quantité de ressources du réseau principal à réserver pour construire le réseau virtuel.

## Claims

**1.** Method of determining operating parameters of a main information transmission network (10) to create, in this main network (10), a virtual network between n points of connection to this main network, these operating parameters being static and independent of the quantity of information currently transported on the main network and/or on the virtual network,

the method comprising:

- a step (30) for establishing constraints on the requested information rates between the n connection points, these constraints being expressed in the form of mathematical inequalities between, on the one hand, a combination of requested information rates, denoted $t_{ij}$, between pairs of connection points of the virtual network and, on the other hand, a limit imposed by the user on the combination of the information rates, the set of these mathematical inequalities defining a bounded domain within which the set of requested information rates between the n connection points on using the virtual network should be located, this domain being a polytope D, and
- a step (36) of automatically calculating operating parameters of the main information transmission network (10) allowing to establish the virtual network satisfying the constraints expressed in the establishment step,

**characterized in that** the establishment step (30) includes a substep (32) for selecting said inequalities from a catalogue of possible inequalities, and **in that** the automatic calculation step (36) is adapted to calculate the operating parameters by using, from the set of possible inequalities in the catalogue, only the inequalities selected in the selection substep.

2. Method according to Claim 1, **characterized in that** the catalogue contains more than 2n + 1 possible inequalities.

3. Method according to Claim 1 or 2, **characterized in that** each of the constraints established in the establishment step (30) takes the form:

$$\sum_{i \in S} \sum_{j \in S \setminus \{i\}} \alpha_{ij}\ t_{ij}\ \otimes\ L_n$$

where:

- $\otimes$ is one of the symbols chosen from the symbols $\leq, <, \geq, >, =$,
- $\alpha_{ij}$ is a weighting coefficient chosen by the user $\alpha_{ij} \in |R^+$,
- S is the set of the n connection points of the virtual network,
- $t_{ij}$ is the requested information rate between the connection points i and j, and
- $L_n$ is a limit imposed by the user on the weighted combination of the requested information rates.

4. Method according to any one of the preceding claims, **characterized in that**, the main information transmission network being made up of nodes interlinked by information transmission arcs, the calculated operating parameters of the main network are coefficients of distribution on the arcs of the main network of the requested information rates $t_{ij}$ between the n connection points of the virtual network, and the maximum information rate to be reserved on these arcs to establish the virtual network.

5. Method according to Claim 4, **characterized in that** the automatic calculation step (36) consists in automatically resolving a system of inequalities including at least the following inequalities:

- inequalities defining the distribution coefficients of the requested information rates on the various arcs of the main network,
- inequalities defining the maximum information rate to be reserved on each information transmission arc,
- inequalities expressing the positivity of the distribution coefficients,
- inequalities expressing the obligation to route, between each pair of connection points of the virtual network, all of the requested information rate $t_{ij}$ between this pair of connection points.

6. Method according to Claim 5, **characterized in that** the automatic calculation step (36) consists in resolving at least the following inequalities:

$$\sum_{p \in P(i,j), p \ni a} x_p^{ij}\ \leq\ x_a^{ij}\ \quad \forall i, j \in S,\ \forall a \in A,$$

$$\sum_{i \in S} \sum_{j \in S \setminus \{i\}} x_a^{ij}\ t_{ij}\ \leq\ f_a\ \quad \forall a \in A, \forall t \in D,$$

$$x_p^{ij} \geq 0 \qquad \forall p \in P(i,j), \forall i,j \in S,$$

$$x_a^{ij} \geq 0 \qquad \forall a \in A, \forall i,j \in S,$$

$$\sum_{p \in P(i,j)} x_p^{ij} \geq 1 \qquad \forall i,j \in S.$$

where:

- P(i,j) is the set of the information transmission paths in the main information transmission network linking the connection points i and j,

- $x_p^{ij}$ is the proportion, called distribution coefficient, of the requested information rate $t_{ij}$ using the path p,

- S is the set of the n connection points of the virtual network,

- $x_a^{ij}$ is the weighting coefficient of the requested information rate $t_{ij}$ using the arc a,

- A is the set of the arcs of the main information transmission network,
- $t_{ij}$ is the requested information rate from the connection point i to the connection point j,
- $f_a$ is the maximum information rate to be reserved on the arc a to create the virtual network,
- t is the vector of the space $R^{|S|(|S|-1)}$ having for its coordinates the set of the $t_{ij}$, t being defined by the relation $t = (t_{ij})_{ij \in S}$, and representing the set of the requested information rates between the n connection points of the virtual network, and
- D is the mathematical polytope defined in the step (30) for establishing constraints on the requested information rates.

7. Method according to Claim 5 or 6, **characterized in that** the automatic calculation step (36) consists in resolving the system of inequalities additionally including inequalities expressing information transmission capability constraints according to which the maximum rate to be reserved on each arc is less than the transmission capability of this arc.

8. Method according to Claim 7, **characterized in that** the automatic calculation step (36) consists in resolving the system of inequalities additionally including the following inequalities:

$$f_a \leq c_a \qquad \forall a \in A$$

where $c_a$ is the maximum information transmission capability of the arc a.

9. Method according to any one of Claims 5 to 8, **characterized in that** the automatic calculation step (36) consists in resolving the system of inequalities additionally including constraints on the topology of the virtual network according to which each path linking a pair of connection points of the virtual network consists of a maximum number of arcs, this maximum number of arcs being chosen by the user.

10. Method according to any one of Claims 5 to 9, **characterized in that** the automatic calculation step (36) consists in resolving the system of inequalities additionally including constraints on the topology of the virtual network according to which each path linking a pair of connection points of the virtual network must pass through one or more particular nodes of the main network, the or each particular node being chosen by the user.

**11.** Method according to any one of the preceding claims, **characterized in that** it includes a step (34) for expressing a criterion to be optimized, and **in that** the automatic calculation step (36) is additionally adapted for the calculated operating parameters to constitute an optimum of the criterion to be optimized.

**12.** Method according to Claim 11, **characterized in that** the step (34) for expressing a criterion consists in expressing a cost criterion to be minimized.

**13.** Method according to Claim 12, **characterized in that** the cost criterion to be minimized takes the form:

$$w^*(D) \;=\; \sum_{a \in A} w_a f_a$$

where:

- $w^*(D)$ is the criterion to be minimized,
- $w_a$ is the cost of a unit of information rate on the arc a,
- $f_a$ is the maximum information rate to be reserved on the arc a to create the virtual network.

**14.** Method according to any one of Claims 5 to 13, **characterized in that** the automatic calculation step (36) includes:

a) a substep (46) for determining at least one vector t, denoted $\dot{t}_r$, corresponding to a vertex of the polytope D and for which the set of the requested information rates $t_{ij}$ passing via one and the same arc has exceeded the maximum information rate $f_a$ currently reserved on this arc, and
b) a substep (54) for resolving the system of inequalities by adding to the latter a new definition of the maximum information rate $f_a$ so that the set of the requested information rates corresponding to each vector $\dot{t}_r$, determined in the step a) can be routed without exceeding the new maximum information rate $f_a$ determined at the end of this substep b).

**15.** Method according to Claim 14, **characterized in that** the automatic calculation step (36) includes:

c) a substep (44) for selecting a limited number of paths of the main information transmission network that can be used to construct the virtual network, and
d) a substep (50) for resolving the system of inequalities by trying to find a solution only from the paths selected in the step c).

**16.** Method according to Claim 15, **characterized in that** the steps b) and d) are carried out alternately.

**17.** Method according to any one of the preceding claims, **characterized in that** it includes a step (100) for configuring the public network, according to determined operating parameters, to construct, in this public network, the virtual network satisfying the constraints expressed in the step (30) for establishing constraints.

**18.** System of determining operating parameters of a main information transmission network (10) to create, in this main network (10), a virtual network between n points of connection to this main network, these operating parameters being static and independent of the quantity of information currently transported on the main network and/or on the virtual network, the system comprising a computer (2) adapted to:

- establish and memorize constraints on the requested information rates between the n connection points, these constraints being expressed in the form of mathematical inequalities between, on the one hand, a combination of requested information rates, denoted $t_{ij}$, between pairs of connection points of the virtual network, and, on the other hand, a limit imposed by the user of the system on the combination of the information rates, the set of these mathematical inequalities defining a bounded domain within which the set of the requested information rates between the n connection points on using the virtual network should be located, this domain being a polytope D, and
- automatically calculating operating parameters of the main information transmission network (10) allowing to establish the virtual network satisfying the constraints established using the computer (2),

**characterized in that** the computer (2) is also adapted to select, under the control of a user when establishing constraints, said inequalities from a catalogue of possible inequalities, and **in that** the computer (2) is adapted to perform the automatic calculation by using, from the possible inequalities, only the inequalities selected using the computer (2).

**19.** System according to Claim 18, **characterized in that** the computer (2) comprises:

- means of selecting, under the control of the user, said inequalities from the catalogue of possible inequalities, and
- means (6, 8, 9) of automatically calculating the operating parameters of the main information transmission network (10) used to establish the virtual network satisfying the constraints established using the computer (2).

**20.** System according to Claim 19, **characterized in that** the automatic calculation means comprise:

- a generator (8) of new information transmission paths that can be used to construct the virtual network, and
- a generator (9) of new linear inequalities defining the quantity of resources of the main network to be reserved to construct the virtual network.

**Patentansprüche**

**1.** Verfahren zur Bestimmung der Betriebsparameter eines Informationsübertragungs-Hauptnetzes (10), um in diesem Hauptnetz (10) ein virtuelles Netz zwischen n Anschlusspunkten an dieses Hauptnetz zu erzeugen, wobei diese Betriebsparameter statisch und von der Menge von momentan über das Hauptnetz und/oder über das virtuelle Netz transportierten Informationen unabhängig sind,
wobei das Verfahren aufweist:

- einen Schritt (30) der Festlegung von Zwängen bezüglich der zwischen den n Anschlusspunkten angeforderten Informationsdurchsätze, wobei diese Zwänge in Form von mathematischen Ungleichheiten zwischen einerseits einer Kombination von angeforderten Informationsdurchsätzen, mit $t_{ij}$ bezeichnet, zwischen Paaren von Anschlusspunkten des virtuellen Netzes und andererseits einem Grenzwert ausgedrückt werden, der vom Benutzer der Kombination von Informationsdurchsätzen aufgezwungen wird, wobei die Gesamtheit dieser mathematischen Ungleichheiten eine begrenzte Domäne definiert, innerhalb der sich die Gesamtheit der zwischen den n Anschlusspunkten bei der Benutzung des virtuellen Netzes angeforderten Informationsdurchsätze befinden muss, wobei diese Domäne ein Polytop D ist, und
- einen Schritt (36) der automatischen Berechnung der Betriebsparameter des Informationsübertragungs-Hauptnetzes (10), die es ermöglichen, das virtuelle Netz aufzubauen, das die Zwänge erfüllt, die während des Festlegungsschritts ausgedrückt werden,

**dadurch gekennzeichnet, dass** der Festlegungsschritt (30) einen Unterschritt (32) der Auswahl der Ungleichheiten in einem Katalog von möglichen Ungleichheiten aufweist, und dass der Schritt (36) der automatischen Berechnung angepasst ist, um die Betriebsparameter zu berechnen, indem unter der Gesamtheit der möglichen Ungleichheiten des Katalogs nur die Ungleichheiten verwendet werden, die während des Auswahl-Unterschritts ausgewählt wurden.

**2.** Verfahren nach Anspruch 1, **dadurch gekennzeichnet, dass** der Katalog mehr als 2n+1 mögliche Ungleichheiten enthält.

**3.** Verfahren nach Anspruch 1 oder 2, **dadurch gekennzeichnet, dass** jeder der im Festlegungsschritt (30) festgelegten Zwänge die folgende Form hat:

$$\sum_{i \in S} \sum_{j \in S \setminus \{i\}} \alpha_{ij} \, t_{ij} \quad \otimes \quad L_n$$

wobei:

- ⊗ eines der Symbole ist, das unter den Symbolen ≤, <, ≥, >, = ausgewählt wird,
- $\alpha_{ij}$ ein Gewichtungskoeffizient ist, der vom Benutzer $\alpha_{ij} \in |R^+$ ausgewählt wird,
- S die Gesamtheit der n Anschlusspunkte des virtuellen Netzes ist,
- $t_{ij}$ der angeforderte Informationsdurchsatz zwischen den Anschlusspunkten i und j ist, und
- $L_n$ ein Grenzwert ist, der vom Benutzer der gewichteten Kombination der angeforderten Informationsdurchsätze aufgezwungen wird.

4. Verfahren nach einem der vorhergehenden Ansprüche, **dadurch gekennzeichnet, dass**, da das Informationsübertragungs-Hauptnetz von Knoten gebildet wird, die durch Informationsübertragungsbögen miteinander verbunden sind, die berechneten Betriebsparameter des Hauptnetzes Verteilungskoeffizienten der angeforderten Informationsdurchsätze $t_{ij}$ zwischen den n Anschlusspunkten des virtuellen Netzes auf die Bögen des Hauptnetzes sowie der maximale Informationsdurchsatz sind, der auf diesen Bögen für den Aufbau des virtuellen Netzes reserviert werden muss.

5. Verfahren nach Anspruch 4, **dadurch gekennzeichnet, dass** der Schritt (36) der automatischen Berechnung darin besteht, automatisch ein System von Ungleichungen zu lösen, das mindestens die folgenden Ungleichungen aufweist:

   - Ungleichungen, die die Verteilungskoeffizienten der angeforderten Informationsdurchsätze auf den verschiedenen Bögen des Hauptnetzes definieren,
   - Ungleichungen, die den maximalen Informationsdurchsatz definieren, der auf jedem Informationsübertragungsbogen reserviert werden muss,
   - Ungleichungen, die die Positivität der Verteilungskoeffizienten ausdrücken,
   - Ungleichungen, die die Verpflichtung ausdrücken, zwischen jedem Paar von Anschlusspunkten des virtuellen Netzes die Gesamtheit des angeforderten Informationsdurchsatzes $t_{ij}$ zwischen diesem Paar von Anschlusspunkten weiterzuleiten.

6. Verfahren nach Anspruch 5, **dadurch gekennzeichnet, dass** der Schritt (36) der automatischen Berechnungen darin besteht, zumindest die folgenden Ungleichungen zu lösen:

$$\sum_{p \in P(i,j), p \ni a} x_p^{ij} \leq x_a^{ij} \quad \forall i,j \in S, \ \forall a \in A,$$

$$\sum_{i \in S} \sum_{j \in S \setminus \{i\}} x_a^{ij} \, t_{ij} \leq f_a \quad \forall a \in A, \forall t \in D,$$

$$x_p^{ij} \geq 0 \quad \forall p \in P(i,j), \forall i,j \in S,$$

$$x_a^{ij} \geq 0 \quad \forall a \in A, \forall i,j \in S,$$

$$\sum_{p \in P(i,j)} x_p^{ij} \geq 1 \quad \forall i,j \in S.$$

wobei:

- P(i,j) die Gesamtheit der InformationsübertragungsWege im Informationsübertragungs-Hauptnetz ist, die die Anschlusspunkte i und j verbinden,

- $X_p^{ij}$ das Verhältnis, genannt Verteilungskoeffizient, des angeforderten Informationsdurchsatzes $t_{ij}$ ist, der über den Weg p verläuft,

- S die Gesamtheit der n Anschlusspunkte des virtuellen Netzes ist,

- $X_a^{ij}$ der Verteilungskoeffizient des angeforderten Informationsdurchsatzes $t_{ij}$ ist, der über den Bogen a verläuft,

- A die Gesamtheit der Bögen des Informationsübertragungs-Hauptnetzes ist,

- $t_{ij}$ der angeforderte Informationsdurchsatz vom Anschlusspunkt i zum Anschlusspunkt j ist,

- $f_a$ der maximale Informationsdurchsatz ist, der auf dem Bogen reserviert werden muss, um das virtuelle Netz zu erzeugen,

- t der Vektor des Raums $R^{|S|(|S|-1)}$ ist, der als Koordinaten die Gesamtheit der $t_{ij}$ hat, wobei t durch die Beziehung $t = (t_{ij})_{i,j \in S}$ definiert ist und die Gesamtheit der geforderten Informationsdurchsätze zwischen den n Anschlusspunkten des virtuellen Netzes darstellt, und

- D das mathematische Polytop ist, das im Schritt (30) des Festlegens der Zwänge der angeforderten Informationsdurchsätze definiert wird.

7.  Verfahren nach Anspruch 5 oder 6, **dadurch gekennzeichnet, dass** der Schritt (36) der automatischen Berechnung darin besteht, das System von Ungleichungen zu lösen, das zusätzlich Ungleichungen aufweist, die Zwänge der Informationsübertragungskapazität ausdrücken, gemäß denen der maximal auf jedem Bogen zu reservierende Durchsatz geringer ist als die Übertragungskapazität dieses Bogens.

8.  Verfahren nach Anspruch 7, **dadurch gekennzeichnet, dass** der Schritt (36) der automatischen Berechnung darin besteht, das System von Ungleichungen zu lösen, das außerdem die folgenden Ungleichungen aufweist:

$$f_a \leq c_a \qquad \forall \, \alpha \in A$$

wobei $c_a$ die maximale Informationsübertragungskapazität des Bogens a ist.

9.  Verfahren nach einem der Ansprüche 5 bis 8, **dadurch gekennzeichnet, dass** der Schritt (36) der automatischen Berechnung darin besteht, das System von Ungleichungen zu lösen, das außerdem Zwänge bezüglich der Topologie des virtuellen Netzes aufweist, gemäß denen jeder Weg, der ein Paar von Anschlusspunkten des virtuellen Netzes verbindet, aus einer maximalen Anzahl von Bögen besteht, wobei diese maximale Anzahl von Bögen vom Benutzer ausgewählt wird.

10. Verfahren nach einem der Ansprüche 5 bis 9, **dadurch gekennzeichnet, dass** der Schritt (36) der automatischen Berechnung darin besteht, das System von Ungleichungen zu lösen, das außerdem Zwänge bezüglich der Topologie des virtuellen Netzes aufweist, gemäß denen jeder Weg, der ein Paar von Anschlusspunkten des virtuellen Netzes verbindet, über einen oder mehrere besondere Knoten des Hauptnetzes verlaufen muss, wobei der oder die besonderen Knoten vom Benutzer ausgewählt werden.

11. Verfahren nach einem der vorhergehenden Ansprüche, **dadurch gekennzeichnet, dass** es einen Schritt (34) des Ausdrucks eines zu optimierenden Kriteriums aufweist, und dass der Schritt (36) der automatischen Berechnung außerdem angepasst ist, damit die berechneten Betriebsparameter ein Optimum des zu optimierenden Kriteriums bilden.

12. Verfahren nach Anspruch 11, **dadurch gekennzeichnet, dass** der Schritt (34) des Ausdrucks eines Kriteriums darin besteht, ein zu minimierendes Kostenkriterium auszudrücken.

13. Verfahren nach Anspruch 12, **dadurch gekennzeichnet, dass** das zu minimierende Kostenkriterium die folgende Form hat:

$$w^*(D) \quad = \quad \sum_{a \in A} w_a f_a$$

wobei:

- $w^*(D)$ das zu minimierende Kriterium ist,
- $w_a$ die Kosten einer Informationsdurchsatzeinheit auf dem Bogen a sind,
- $f_a$ der maximale Informationsdurchsatz ist, der auf dem Bogen reserviert werden muss, um das virtuelle Netz zu erzeugen.

**14.** Verfahren nach einem der Ansprüche 5 bis 13, **dadurch gekennzeichnet, dass** der Schritt (36) der automatischen Berechnung aufweist:

a) einen Unterschritt (46) der Bestimmung mindestens eines Vektors t, mit $\overset{\bullet}{t_r}$ bezeichnet, der einem Scheitel des Polytops D entspricht, und für den die Gesamtheit der angeforderten Informationsdurchsätze $t_{ij}$, die über den gleichen Bogen a verlaufen, den maximalen Informationsdurchsatz $f_a$ übersteigt, der momentan auf diesem Bogen reserviert ist, und
b) einen Unterschritt (54) der Auflösung des Systems von Ungleichungen, indem diesem eine neue Definition des maximalen Informationsdurchsatzes $f_a$ hinzugefügt wird, damit die Gesamtheit der angeforderten Informationsdurchsätze entsprechend jedem Vektor $\overset{\bullet}{t_r}$, der im Schritt a) bestimmt wird, ohne Überschreiten des neuen maximalen Informationsdurchsatzes $f_a$ weitergeleitet werden kann, der am Ende dieses Unterschritts b) bestimmt wird.

**15.** Verfahren nach Anspruch 14, **dadurch gekennzeichnet, dass** der Schritt (36) der automatischen Berechnung aufweist:

c) einen Unterschritt (44) der Auswahl einer begrenzten Anzahl von Wegen des Informationsübertragungs-Hauptnetzes, die verwendet werden können, um das virtuelle Netz zu konstruieren, und
d) einen Unterschritt (50) der Auflösung des Systems von Ungleichungen, indem eine Lösung nur unter den im Schritt c) ausgewählten Wegen gesucht wird.

**16.** Verfahren nach Anspruch 15, **dadurch gekennzeichnet, dass** die Schritte b) und d) abwechselnd durchgeführt werden.

**17.** Verfahren nach einem der vorhergehenden Ansprüche, **dadurch gekennzeichnet, dass** es einen Schritt (100) der Konfiguration des öffentlichen Netzes in Abhängigkeit von den bestimmten Betriebsparametern aufweist, um in diesem öffentlichen Netz das virtuelle Netz zu konstruieren, das die Zwänge erfüllt, die im Schritt (30) der Festlegung von Zwängen ausgedrückt werden.

**18.** System zur Bestimmung der Betriebsparameter eines Informationsübertragungs-Hauptnetzes (10), um in diesem Hauptnetz (10) ein virtuelles Netz zwischen n Anschlusspunkten an dieses Hauptnetz zu erzeugen, wobei diese Betriebsparameter statisch und von der momentan auf dem Hauptnetz und/oder auf dem virtuellen Netz transportierten Menge von Informationen unabhängig sind, wobei das System einen Rechner (2) aufweist, der angepasst ist, um:

- Zwänge bezüglich der angeforderten Informationsdurchsätze zwischen den n Anschlusspunkten festzulegen und zu speichern,

wobei diese Zwänge in Form von mathematischen Ungleichheiten zwischen einerseits einer Kombination von angeforderten Informationsdurchsätzen, mit $t_{ij}$ bezeichnet, zwischen Paaren von Anschlusspunkten des virtuellen Netzes, und andererseits einem Grenzwert ausgedrückt werden, der vom Benutzer des Systems der Kombination von Informationsdurchsätzen aufgezwungen wird, wobei die Gesamtheit dieser mathematischen Ungleichheiten eine begrenzte Domäne definiert, innerhalb der sich die Gesamtheit der angeforderten Informationsdurchsätze zwischen den n Anschlusspunkten bei der Benutzung des virtuellen Netzes befinden muss, wobei diese Domäne ein Polytop D ist, und

- automatisch Betriebsparameter des Informationsübertragungs-Hauptnetzes (10) zu berechnen, die es erlauben, das virtuelle Netz aufzubauen, das die Zwänge erfüllt, die mit Hilfe des Rechners (2) festgelegt wurden,

**dadurch gekennzeichnet, dass** der Rechner (2) ebenfalls angepasst ist, um unter der Steuerung durch einen Benutzer bei der Festlegung der Zwänge die Ungleichheiten in einem Katalog von möglichen Ungleichheiten auszuwählen, und dass der Rechner (2) angepasst ist, um die automatische Berechnung durchzuführen, indem er unter den möglichen Ungleichheiten nur die Ungleichheiten verwendet, die mit Hilfe des Rechners (2) ausgewählt wurden.

19. System nach Anspruch 18, **dadurch gekennzeichnet, dass** der Rechner (2) aufweist:

- Mittel zur Auswahl, unter der Steuerung des Benutzers, der Ungleichheiten im Katalog von möglichen Ungleichheiten, und
- Mittel (6, 8, 9) zur automatischen Berechnung der Betriebsparameter des Informationsübertragungs-Hauptnetzes (10), die es ermöglichen, das virtuelle Netz aufzubauen, das die mit Hilfe des Rechners (2) festgelegten Zwänge erfüllt.

20. System nach Anspruch 19, **dadurch gekennzeichnet, dass** die automatischen Rechenmittel aufweisen:

- einen Generator (8) neuer Wege zur Informationsübertragung, die verwendet werden können, um das virtuelle Netz zu konstruieren, und
- einen Generator (9) neuer linearer Ungleichungen, die die Menge von Ressourcen des Hauptnetzes definieren, die reserviert werden müssen, um das virtuelle Netz zu konstruieren.

**_FIG.1_**

**_FIG.3_**

**FIG.2**

_**FIG.4**_

_**FIG.5**_

| D \ A | 1 | 2 | 3 | 4 | 5 | 6 | 7 |
|---|---|---|---|---|---|---|---|
| 1 | 0 | 50 | 82 | 0 | 96 | 64 | 69 |
| 2 | 50 | 0 | 79 | 0 | 0 | 0 | 95 |
| 3 | 82 | 79 | 0 | 96 | 99 | 89 | 0 |
| 4 | 0 | 0 | 96 | 0 | 96 | 94 | 54 |
| 5 | 96 | 0 | 99 | 96 | 0 | 0 | 88 |
| 6 | 64 | 0 | 89 | 94 | 0 | 0 | 0 |
| 7 | 69 | 95 | 0 | 54 | 88 | 0 | 0 |

## FIG.6